# EUROPEAN PATENT APPLICATION

(11) **EP 4 711 981 A1**
(43) Date of publication of application: **18.03.2026**
(21) Application number: 25201877.5
(22) Date of filing: 12.09.2025
(51) Int. Cl.: G06N 3/045, G06N 3/084, G06N 3/096, G06N 3/0442, G06N 3/0464, G06N 3/0495, G06N 3/09, G06N 3/094

(54) **EFFICIENT ESTIMATION & VERIFICATION WITH EARLY EXITS**

(30) Priority: 12.09.2024 US 202418883971
(71) Applicant: GOOGLE LLC, Mountain View CA 94043 (US)
(72) Inventor: SCHUSTER, Tal, Mountain View, 94043 (US); KOROTKOV, Ivan, London, N1C 4AG (GB); JI, Ziwei, Mountain View, 94043 (US); KIM, Seungyeon, Mountain View, 94043 (US)
(74) Representative: Marks & Clerk GST

(57) **Abstract**

One example aspect is directed to a computer-implemented method (400) for performing model decoding with reduced latency. The method includes obtaining (402) a pre-trained sequence processing model comprising a plurality of layers. The method includes modifying (404) the sequence processing model to contain an adapter layer (106) that is configured to receive and process an intermediate representation generated by a particular intermediate layer of the plurality of layers to predict an output token. The method includes training (406) the adapter layer while holding the plurality of layers of the sequence processing model frozen. The method includes deploying (408) the sequence processing model for speculative decoding in which the adapter layer, the particular intermediate layer, and the plurality of layers (104) that precede the particular intermediate layer perform speculative token decoding and the plurality of layers (108) that are subsequent to the particular intermediate layer perform token verification.

## Description

### FIELD

The present disclosure relates generally to machine learning processes and machine-learned devices and systems. More particularly, the present disclosure relates to a speculative decoding approach which uses a joint model for both drafting and verification.

### BACKGROUND

A computer can receive input(s). The computer can execute instructions to process the input(s) to generate output(s) using a parameterized model. The computer can obtain feedback on its performance in generating the outputs with the model. The computer can generate feedback by evaluating its performance. The computer can receive feedback from an external source. The computer can update parameters of the model based on the feedback to improve its performance. In this manner, the computer can iteratively "learn" to generate the desired outputs. The resulting model is often referred to as a machine-learned model.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

One general aspect includes a computing system for performing model decoding with reduced latency. The computing system includes one or more processors. The system also includes one or more non-transitory computer-readable media that collectively store a machine-learned sequence processing model. The machine-learned sequence processing model may include: a plurality of drafting layers configured to process a current input to generate an intermediate representation; an adapter layer configured to process the intermediate representation to generate a next drafted token; and a plurality of verification layers configured to process the intermediate representation to generate a next verification token. The one or more non-transitory computer-readable media collectively store computer-executable instructions for performing operations. The operations include, for each of a plurality of decoding iterations: processing the current input with the plurality of drafting layers of the sequence processing model to generate the intermediate representation for the decoding iteration; processing the intermediate representation for the decoding iteration with the adapter layer to generate a next drafted token for the decoding iteration; adding the next drafted token to the current input for a subsequent decoding iteration. The operations also include respectively processing the respective intermediate representation from each decoding iteration with the plurality of verification layers of the sequence processing model to generate a plurality of verification tokens for the plurality of decoding iterations. Other embodiments of this aspect include corresponding computer systems, apparatus, and computer programs recorded on one or more computer storage devices, each configured to perform the actions of the methods.

Some example implementations may include one or more of the following features. The computing system where the operations further may include comparing the drafted token for each decoding iteration with the verification token for such decoding iteration to identify any disagreements. The plurality of drafting layers may include fewer layers than the plurality of verification layers. The machine-learned sequence processing model may include a pre-trained model in which the plurality of drafting layers and the plurality of verification layers were jointly trained based on evaluating outputs of the verification layers with a loss function. The adapter layer may include one or more linear projections. The adapter layer may include one or more multi-layer perceptrons. The adapter layer may have been fine-tuned while holding the plurality of drafting layers frozen. The adapter layer may have been trained using a loss function that may include a knowledge distillation loss term, where the knowledge distillation loss term penalizes a difference between a student output of the adapter layer and a teacher output of the verification layers. The adapter layer may have been trained using a loss function that may include an embedding distillation loss term, where the embedding distillation loss term penalizes a difference between an embedding output of the adapter layer and an embedding output of the verification layers. Respectively processing the respective intermediate representation from each decoding iteration with the plurality of verification layers may be performed subsequent to a final decoding iteration of the plurality of decoding iterations. Respectively processing the respective intermediate representation from each decoding iteration with the plurality of verification layers may be performed at least partially in parallel with one or more of the decoding iterations. For each of the plurality of decoding iterations, the operations further may include storing the intermediate representation. The drafted tokens and the verification tokens may correspond to text content, image content, or audio content. Implementations of the described techniques may include hardware, a method or process, or computer software on a computer-accessible medium.

One general aspect includes a computer-implemented method for performing model decoding with reduced latency. The computer-implemented method includes, for each of a plurality of decoding iterations: processing a current input with a plurality of drafting layers of a sequence processing model to generate an intermediate representation for the decoding iteration; processing the intermediate representation for the decoding iteration with an adapter layer to generate a next drafted token for the decoding iteration; and adding the next drafted token to the current input for a subsequent decoding iteration. The method also includes respectively processing the respective intermediate representation from each decoding iteration with a plurality of verification layers of the sequence processing model to generate a plurality of verification tokens for the plurality of decoding iterations. Other embodiments of this aspect include corresponding computer systems, apparatus, and computer programs recorded on one or more computer storage devices, each configured to perform the actions of the methods.

Some example implementations may include one or more of the following features. The method may include comparing the drafted token for each decoding iteration with the verification token for such decoding iteration to identify any disagreements. The plurality of drafting layers may include fewer layers than the plurality of verification layers. The machine-learned sequence processing model may include a pre-trained model in which the plurality of drafting layers and the plurality of verification layers were jointly trained based on evaluation of outputs of the verification layers. Implementations of the described techniques may include hardware, a method or process, or computer software on a computer-accessible medium.

One general aspect includes one or more non-transitory computer-readable media that collectively store computer-executable instructions for performing operations. The operations may include obtaining a pre-trained sequence processing model which may include a plurality of layers. The operations may include modifying the sequence processing model to contain an adapter layer that is configured to receive and process an intermediate representation generated by a selected intermediate layer of the plurality of layers to predict an output token. The operations may include training the adapter layer while holding the plurality of layers of the sequence processing model frozen. The operations may include deploying the sequence processing model for speculative decoding in which the adapter layer, the particular intermediate layer, and the plurality of layers that precede the particular intermediate layer perform speculative token decoding and the plurality of layers that are subsequent to the particular intermediate layer perform token verification. Other embodiments of this aspect include corresponding computer systems, apparatus, and computer programs recorded on one or more computer storage devices, each configured to perform the actions of the methods.

Some example implementations may include one or more of the following features. The one or more non-transitory computer-readable media where training the adapter layer may include optimizing a loss function that may include a knowledge distillation loss term, where the knowledge distillation loss term penalizes a difference between a student output of the adapter layer and a teacher output of the plurality of layers that are subsequent to the particular intermediate layer. Training the adapter layer optimizing a loss function that may include an embedding distillation loss term, where the embedding distillation loss term penalizes a difference between an embedding output of the adapter layer and an embedding output of the plurality of layers that are subsequent to the particular intermediate layer. Implementations of the described techniques may include hardware, a method or process, or computer software on a computer-accessible medium.

### BRIEF DESCRIPTION OF THE DRAWINGS

Figure 1 depicts a block diagram of an example sequence processing model that performs model decoding with reduced latency according to example embodiments of the present disclosure.
Figure 2 depicts a block diagram of an example training configuration for training a sequence processing model to perform model decoding with reduced latency according to example embodiments of the present disclosure.
Figure 3 depicts a block diagram of an autoregressive decoding and verification approach according to example embodiments of the present disclosure.
Figure 4 depicts a flow chart diagram of an example method to perform decoding with reduced latency according to example embodiments of the present disclosure.
Figure 5 is a flow chart diagram illustrating an example method for training a machine-learned model according to example implementations of aspects of the present disclosure;
Figure 6 is a block diagram of an example processing flow for using machine-learned model(s) to process input(s) to generate output(s) according to example implementations of aspects of the present disclosure;
Figure 7 is a block diagram of an example sequence processing model according to example implementations of aspects of the present disclosure;
Figure 8 is a block diagram of an example technique for populating an example input sequence for processing by a sequence processing model according to example implementations of aspects of the present disclosure;
Figure 9 is a block diagram of an example model development platform according to example implementations of aspects of the present disclosure;
Figure 10 is a block diagram of an example training workflow for training a machine-learned model according to example implementations of aspects of the present disclosure;
Figure 11 is a block diagram of an inference system for operating one or more machine-learned model(s) to perform inference according to example implementations of aspects of the present disclosure;
Figure 12 is a block diagram of an example networked computing system according to example implementations of aspects of the present disclosure;
Figure 13 is a block diagram of an example computing device according to example implementations of aspects of the present disclosure; and
Figure 14 is a block diagram of an example computing device according to example implementations of aspects of the present disclosure.

### DETAILED DESCRIPTION

Example aspects of the present disclosure are directed to systems and methods for accelerating inference-time serving of sequence processing models (e.g., large language models (LLMs), large multimodal models (LMMs) such as vision-language models (VLMs), etc.) by combining early exit and verification techniques within a single model. One example method leverages the lower layers of a pre-trained model for fast decoding of drafts using early exit adapters, while the higher layers are used to verify the accuracy of the drafts. Therefore, the lower layers may be referred to as "drafting layers" while the higher layers can be referred to as "verification layers".

Thus, the proposed method can utilize a single model for both drafting and verification, eliminating the need for separate models and reducing computational overhead. **In** particular, early exit adapter layers can be designed and trained to produce accurate next-token predictions based on intermediate representations from the lower layers of the model. These adapter layers can act as lightweight shortcuts between the lower layers and a token prediction head, enabling efficient drafting.

As each token is drafted by the drafting layers, the model's hidden state at the exit point is cached, and then the verification process can be continued from this hidden state using the remaining layers of the model. The verification process can employ techniques similar to speculative decoding or other sampling approaches to correct any errors in the drafted tokens.

The proposed approach provides a more efficient and faster method for decoding LLMs, enabling faster and more cost-effective text generation. In particular, example implementations of the proposed approach allow for a significant speedup in decoding, achieving, for example, 1.5X to 3X latency reduction, without compromising the quality of the generated text.

More particularly, a pre-trained sequence processing model (e.g., a large language model (LLM), a large multimodal model (LMM) such as a vision-language model (VLM), etc.) can include a plurality of layers. The sequence processing model can be pre-trained to perform a number of different tasks such as generating text, generating image content, generating audio content, etc. The layers of the sequence processing model can be jointly trained based on evaluating outputs generated by processing an input with the plurality of layers. For example, the sequence processing model can be pre-trained and/or fine-tuned using various loss functions that evaluate the outputs of the plurality of layers.

The plurality of layers of the model can be arranged in a sequence. Each layer can receive and process a layer input to generate a respective layer output. For example, a first layer of the plurality of layers can receive a model input and generate a first layer output. Each layer subsequent to the first layer can receive as input the layer output from the preceding layer in the sequence of layers and generate an intermediate representation, which may also be referred to as an embedding or a hidden state. A final layer of the plurality of layers can receive the layer output from the preceding layer and generate a final layer output (e.g., which may represent or be used to generate a model output).

According to an aspect of the present disclosure, the sequence processing can be modified to include an adapter layer at a particular layer in the sequence of layers. The adapter layer can be configured to receive and process the intermediate representation generated by the particular layer to predict an output token. Thus, the adapter layer can represent an early exit layer of the model in the sense that the adapter layer can predict an output token without having to process all of the layers of the sequence processing model.

In general, the adapter layer can be a lightweight layer that does not add significant compute to the drafting process. As one example, the adapter layer can be a linear projection layer. As another example, the adapter layer can be a multi-layer perceptron. As yet another example, the adapter layer can be a low-rank adaptation (LoRA) layer. While the lightweight adapter adds some minimal additional compute on top of the early exit, it is only applied once per prediction and is still much cheaper than running through the full model.

However, the adapter layer may have any number of different architectures. For example, the adapter layer may take the form of a small feed-forward network. In another example, the adapter layer can be a transformer model or otherwise include self-attention mechanisms.

The adapter layer can be fine-tuned or otherwise trained to predict the output token based on the intermediate representation generated by the particular intermediate layer. After such training, the adapter layer can represent an early exit layer of the model in the sense that the adapter layer can predict an output token without having to process all of the layers of the sequence processing model, as described above.

In some implementations, the adapter layer can be trained while holding the drafting layers of the sequence processing model frozen or fixed. In these implementations, the adapter layer can be quickly trained without modifying the underlying model. This may be advantageous in situations where the underlying model is not able to be modified for some reason or if it is desired to maintain the property that the output of the verification layers identically matches the output of the existing, pre-trained model.

In other implementations, the adapter layer can be jointly trained while the drafting layers and/or the verification layers of the sequence processing model are also jointly trained or fine-tuned. This approach may permit the underlying model to slightly adapt its parameters to improve performance within the early exit and verification scheme.

The adapter layer can be trained using any combination of a number of different training approaches. As one example, in some implementations, the adapter layer can be trained using a supervised finetuning loss. For example, the supervised finetuning loss may evaluate the ability of the adapter layer to simply predict the next "correct" token within an existing sequence of text.

As another example, in some implementations, the adapter layer can be trained using a loss function that includes a knowledge distillation loss term. For example, the knowledge distillation loss term can evaluate (e.g., penalize) a difference between a student output of the adapter layer and a teacher output of the verification layers. For example, the student output and the teacher output may be actual token predictions and/or may be probability distributions over a set of candidate tokens.

As yet another example, in some implementations, the adapter layer can be trained using an embedding distillation loss term. For example, the embedding distillation loss term can evaluate (e.g., penalize) a difference between an embedding output of the adapter layer and an embedding output of the verification layers. For example, the embedding outputs can be expressed within a logit domain and/or can be expressed in a latent domain leveraged by one or more intermediate layers of the adapter layer and verification layers.

According to another aspect of the present disclosure, after modifying the model to include the adapter layer, the sequence processing model can be deployed for speculative decoding in which the adapter layer, the particular intermediate layer, and the plurality of layers that precede the particular intermediate layer perform speculative token decoding and the plurality of layers that are subsequent to the particular intermediate layer perform token verification. As such, the particular intermediate layer, and the plurality of layers that precede the particular intermediate layer can be referred to as "drafting layers" and the plurality of layers that are subsequent to the particular intermediate layer can be referred to as "verification layers". The drafting layers and the adapter layer can operate to generate drafted tokens and the verification layers can operate to generate verification tokens.

In particular, when decoding, the model can perform a plurality of decoding iterations. At each decoding iteration, the model can process a current input with the plurality of drafting layers to generate an intermediate representation for the decoding iteration. The model can process the intermediate representation for the decoding iteration with the adapter layer to generate a next drafted token for the decoding iteration. The model can add the next drafted token to the current input for a subsequent decoding iteration. Thus, a computing system can iteratively execute the drafting layers and the adapter layer, which represent an early exit from the model, to autoregressively generate drafted tokens for the plurality of decoding iterations.

According to another aspect of the present disclosure, at each decoding iteration, the model can store the intermediate representation generated by final layer of the drafting layers. This stored intermediate representation can later be used as a starting point for the verification layers to perform verification. Note that, because the verification layers reuse the decoding state of the drafting layers, the verification tokens predicted by the verification layers will be the same as if the full network were used to perform traditional decoding.

In particular, either subsequent to or potentially at least partially in parallel with the decoding iterations, the computing system can perform verification of the drafted tokens using the verification layers. For example, the computing system can process the respective intermediate representation from each decoding iteration with the plurality of verification layers to generate a plurality of verification tokens respectively for the plurality of decoding iterations. For example, the verification layers can be executed in parallel to generate each verification token for each decoding iteration from the respective stored intermediate representation for that decoding iteration.

The verification tokens can be used to verify the drafted tokens. In particular, the computing system that implements the sequence processing model can compare the drafted token for each decoding iteration with the verification token for such decoding iteration to identify any disagreements. For example, the computing system can accept all drafted tokens until a first disagreement is identified between the drafted tokens and the verification tokens. If a disagreement is identified, then the decoding process can begin again starting at the location of the identified disagreement. More generally, the computing system can perform various different techniques for token verification, such as verification techniques which are described in the speculative decoding literature. One example verification approach for speculative decoding is described in Leviathan et. al., Fast Inference from Transformers via Speculative Decoding, Proceedings of the 40th International Conference on Machine Learning (2023*).*

In some implementations, the number of drafting layers is fewer than the number of verification layers. As one example, in some implementations, the number of drafting layers can be 20% or less of the number of verification layers. As another example, in some implementations, the number of drafting layers can be 10% or less of the number of verification layers. As another example, in some implementations, the number of drafting layers can be 5% or less of the number of verification layers.

In general, any ratio of the number of drafting layers to the number of verification layers can be used, and any number of total layers can be used. However, having the number of drafting layers be relatively smaller than the number of verification layers can reduce the latency of the drafting layers relative to the verification layers. When the drafting layers are configured to operate at a lower latency than the verification layers, the overall latency of the drafting and verification process can be reduced as the smaller drafting layers can operate autoregressively at relatively lower latency while the larger verification layers with relatively higher latency can operate in parallel.

In some implementations, multiple exit adapters can be trained on top of different layers to examine different exit locations. As long the training does not modify the drafting and/or verification layers (e.g., these are held "frozen"), then the adapters are trained independently. As such, all unnecessary adapters can be discarded and the system can keep only the adapter(s) for the exit(s) that are ultimately used for the drafting process.

Empirically, it has been found that the adapter layers significantly improve the performance of predictions from relatively earlier layers. This means that the early intermediate hidden-states of the existing backbone model already hold meaningful information for next-token predictions, but some lightweight adapter layers (e.g., projections) are needed to adjust them to align them with the expected embedding space of the top layer.

According to another aspect of the present disclosure, in some implementations, the verification process conducted by the verification layers can be conditionally or selectively performed. For example, the verification process can be selectively performed as a function of one or more confidence values generated by the drafting layers and/or the adapter layer and associated with one or more of the drafted tokens. This flexibility allows for a more efficient and expedited output generation when the early exit predictions meet a predefined confidence threshold.

The confidence of each predicted drafting token can be assessed through various approaches. For instance, the probability assigned to the predicted drafting tokens by the adapter layer can serve as a measure of confidence. For example, the confidence for each drafting token can be measured based on the probability assigned to the token by the adapter layer after a softmax operation is performed. Alternatively or additionally, a separate, lightweight classifier could be employed to evaluate the confidence based on the hidden state and the predicted tokens.

In some implementations, the verification process can be selectively performed on a token-by-token basis. For example, if a confidence (e.g., a confidence generated by the adapter layer and/or by some other model) associated with a certain token exceeds a threshold value, then such token can be "verified" without needing to compute a corresponding verification token. If the confidence associated with the certain token does not exceed the threshold value, then such token can be verified using the verification layers, as described elsewhere herein.

Additionally or alternatively, the verification process can be selectively performed on a batch of drafted tokens (e.g., a batch of fixed length or dynamic length, such as an entire decoding length). For example, if an average confidence associated with all tokens in a batch exceeds a threshold value, then the entire batch can be verified without execution of the verification layers. In another example, a moving average confidence over a moving window of tokens can be evaluated. Other approaches can be used as well.

By incorporating conditional or selective verification, the system can dynamically balance between speed and accuracy, skipping the verification step when the confidence is sufficiently high, thereby reducing latency without significantly compromising the quality of the output. In particular, in implementations which use a threshold confidence value, this threshold confidence value can be treated as a hyperparameter which enables tuning a tradeoff between latency and quality.

The systems and methods of the present disclosure can provide a number of technical effects and benefits. For example, the systems and methods of the present disclosure can accelerate the serving of sequence processing models (e.g., large language models (LLMs), large multimodal models (LMMs) such as vision-language models (VLMs), etc. ) by combining early exit and verification techniques within a single model. For example, the systems and methods of the present disclosure can leverage the lower layers of a pre-trained model for fast decoding of drafts using early exit adapters, while the higher layers are used to verify the accuracy of the drafts. Example implementations of the proposed approach allow for a significant speedup in decoding, achieving e.g., 1.5X to 3X latency reduction, without compromising the quality of the generated text. Thus, one technical effect of the proposed techniques is to reduce the latency in decoding from sequence processing models.

Another technical effect of the proposed techniques is to reduce the overhead associated with executing multiple different models. Specifically, prior techniques for speculative decoding of sequence processing models have required the use of separate models for drafting and verification, which increases the computational overhead (e.g., in terms of total number of floating point operations that must be executed). In particular, when using two separate models, there is computational cost associated with executing each separate model. In contrast, the proposed techniques can utilize a single model for both drafting and verification, which reduces the computational overhead. For example, drafting layer computations are used for both drafting and verification, resulting in reduced number of operations that need to be performed.

Another technical effect of the proposed techniques is to reduce the memory footprint associated with serving sequence processing models. Specifically, prior techniques for speculative decoding of sequence processing models have required the use of separate models for drafting and verification, which increases the memory footprint (e.g., in terms of total number of parameters to be stored). In particular, when using two separate models, there is memory cost associated with storing the separate models. In contrast, the proposed techniques can utilize a single model for both drafting and verification, which reduces the memory footprint. For example, drafting layer parameters are used for both drafting and verification, resulting in reduced number of parameters that need to be stored.

Another technical effect of the proposed techniques is to reduce the computational cost of serving and handling sequence processing models in a computing infrastructure. Specifically, prior techniques for speculative decoding of sequence processing models have required the use of separate models for drafting and verification, which increases the computational cost of serving the models, as each model has a separate serving cost engendered by separate loading of the model into memory, such as RAM or hardware accelerators and/or other serving or infrastructure costs. In contrast, the proposed techniques can utilize a single model for both drafting and verification, which reduces the computational cost. Specifically, a single model can be loaded into memory, which can reduce the cost of serving the model.

Another technical effect of the proposed techniques lies in the ability to re-use or re-purpose (e.g., via modification to include an adapter layer) an existing pre-trained model for both drafting and verification. In particular, existing pre-trained models can be modified to include an adapter layer, which allows the existing model to be used for both drafting and verification without requiring a new model to be trained. Thus, any number of existing models can be re-purposed for both drafting and verification. This can enable existing models to quickly be adapted for the proposed techniques and avoids the need for extensive training operations to be performed.

Various example implementations are described herein with respect to the accompanying Figures.

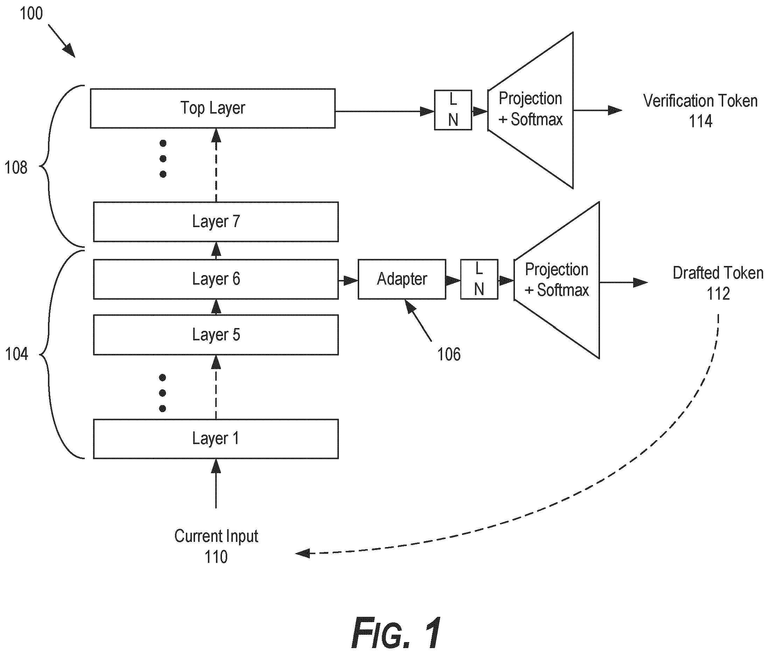

Figure 1 depicts a block diagram of an example sequence processing model 100 according to example embodiments of the present disclosure. The sequence processing model 100 can be a large language model (LLM), a large multimodal model (LMM) such as a vision-language model (VLM), or any other suitable sequence processing model. The sequence processing model 100 can include a plurality of drafting layers 104, an adapter layer 106, and a plurality of verification layers 108. The drafting layers 104 can be configured to process a current input 110 to generate an intermediate representation. The adapter layer 106 can be configured to process the intermediate representation to generate a next drafted token 112. The verification layers 108 can be configured to process the intermediate representation to generate a next verification token 114.

Figure 1 provides one example representation in which the plurality of drafting layers 104 includes six layers. However, it will be appreciated that the plurality of drafting layers 104 can include any number of layers. Similarly, it will be appreciated that the plurality of verification layers 108 can include any number of layers. In some implementations, the number of drafting layers 104 is fewer than the number of verification layers 108. For example, in some implementations, the number of drafting layers 104 can be 20% or less of the number of verification layers 108. For example, in some implementations, the number of drafting layers 104 can be 10% or less of the number of verification layers 108. As another example, in some implementations, the number of drafting layers 104 can be 5% or less of the number of verification layers 108. In general, any ratio of the number of drafting layers 104 to the number of verification layers 108 can be used.

However, having the number of drafting layers 104 be relatively smaller than the number of verification layers 108 can reduce the latency of the drafting layers 104 relative to the verification layers 108. When the drafting layers 104 are configured to operate at a lower latency than the verification layers 108, the overall latency of the drafting and verification process can be reduced as the smaller drafting layers 104 can operate autoregressively at relatively lower latency while the larger verification layers 108 can operate in parallel.

In some implementations, multiple exit adapters (not shown) can be trained on top of different layers to examine different exit locations. As long the training does not modify the drafting and/or verification layers (e.g., these are held "frozen"), then the adapters are trained independently. As such, all unnecessary adapters can be discarded and the system can keep only the adapter(s) for the exit(s) that are ultimately used for the drafting process.

As one example, the adapter layer 106 can include a linear projection layer. A linear projection layer is a linear function that linearly maps the input to a new vector space. As another example, the adapter layer 106 can include a non-linear projection layer. As another example, the adapter layer 106 can include a convolutional layer. As another example, the adapter layer 106 can include a recurrent neural network (RNN) layer. As another example, the adapter layer 106 can include a transformer layer. As another example, the adapter layer 106 can include an attention layer. As another example, the adapter layer 106 can include a fully-connected layer. As another example, the adapter layer 106 can include a multi-layer perceptron (MLP). A multi-layer perceptron is a feedforward artificial neural network with one or more hidden layers. As another example, the adapter layer 106 can include a layer that applies a natural log function. As another example, the adapter layer 106 can include a softmax layer. The softmax layer can be a softmax function that outputs the probability distribution over the set of possible output tokens.

The sequence processing model 100 can be configured to perform a plurality of decoding iterations. At each decoding iteration, the sequence processing model 100 can process the current input 110 with the plurality of drafting layers 104 to generate an intermediate representation for the decoding iteration. The sequence processing model 100 can process the intermediate representation for the decoding iteration with the adapter layer 106 to generate a next drafted token 112 for the decoding iteration. The sequence processing model 100 can add the next drafted token 112 to the current input 110 for a subsequent decoding iteration. Thus, the sequence processing model 100 can execute the drafting layers 104 and the adapter layer 106, which represent an early exit from the model to autoregressively generate drafted tokens 112 for the plurality of decoding iterations.

At each decoding iteration, the sequence processing model 100 can store the intermediate representation generated by the drafting layers 104. This stored intermediate representation can later be used as a starting point for the verification layers 108 to perform verification. In particular, either subsequent to or potentially at least partially in parallel with the decoding iterations, the sequence processing model 100 can perform verification of the drafted tokens 112 using the verification layers 108. For example, the sequence processing model 100 can process the respective intermediate representation from each decoding iteration with the plurality of verification layers 108 to generate a plurality of verification tokens 114 respectively for the plurality of decoding iterations.

A verification process can be performed to verify that each drafted token 112 is correct. For example, the sequence processing model 100 can perform a verification process to verify that each drafted token 112 is correct using the verification layers 108. For example, the verification layers 108 can be executed in parallel to generate each verification token 114 for each decoding iteration from the respective stored intermediate representation for that decoding iteration. The verification tokens 114 can be used to verify the drafted tokens 112. In particular, the sequence processing model 100 that implements the sequence processing model 100 can compare the drafted token 112 for each decoding iteration with the verification token 114 for such decoding iteration to identify any disagreements. For example, the sequence processing model 100 can accept all drafted tokens 112 until a disagreement is identified between the drafted tokens 112 and the verification tokens 114.

As described above, in some implementations, the verification process can be conditionally or selectively performed based on one or more confidence values associated with one or more of the drafted tokens 112.

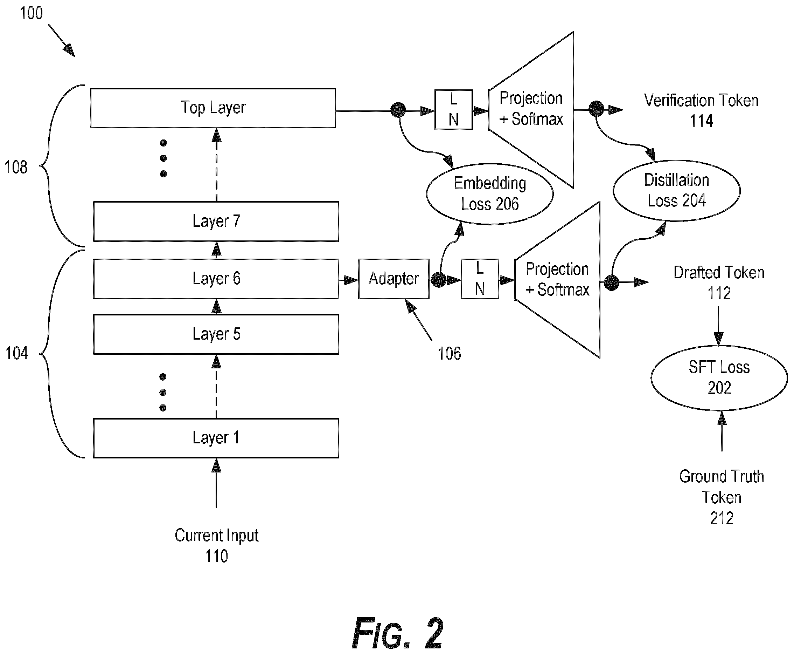

Figure 2 illustrates an example process for training the sequence processing model 100. Figure 2 illustrates three different loss functions: a supervised finetuning loss 202, a distillation loss 204, and an embedding loss 206. Any combination of the loss functions 202, 204, 206 can be used to train the sequence processing model 100.

The supervised finetuning loss 202 can evaluate the ability of the adapter layer 106 to simply predict the next "correct" token within an existing sequence of text. For example, the supervised finetuning loss can compare the drafted token 112 generated by the adapter layer 106 with a ground truth token 212. The ground truth token 212 can be a token that is known to be correct (e.g., because it is the next token included in a training example).

The distillation loss 204 can evaluate a difference between a student output of the adapter layer 106 and a teacher output of the verification layers 108. For example, the distillation loss 204 can compare the drafted token 112 generated by the adapter layer 106 with a verification token 114 generated by the verification layers 108. The comparison can be made on the token itself or on a probability distribution over a set of candidate tokens. For example, the comparison can be made between the two probability distributions respectively output by the respective softmax layers of the adapter layer 106 and the verification layers 108.

The embedding loss 206 can evaluate a difference between an embedding output of the adapter layer 106 and an embedding output of the verification layers 108. For example, the embedding loss 206 can compare an intermediate representation, hidden state, or other form of embedding contained within or otherwise produced by the adapter layer 106 with an intermediate representation, hidden state, or other form of embedding contained within or otherwise produced by of the verification layers 108.

In some implementations, any combination of the loss functions 202, 204, 206 can be used to train only the adapter layer 106 while leaving the drafting layers 104 and the verification layers 108 alone. For example, this can be referred to as an "adapter only" approach.

In other implementations, any combination of the loss functions 202, 204, 206 can be used to train the adapter layer 106 in combination with the drafting layers 104. For example, this can be referred to as an "adapter+drafting" approach.

Training using the loss functions 202, 204, 206 can include backpropagating the loss functions 202, 204, 206 through the sequence processing model 100 (e.g., the adapter layer 106) to train the sequence processing model 100 (e.g., the adapter layer 106). Backpropagating the loss functions 202, 204, 206 can include determining a gradient of the loss functions 202, 204, 206 with respect to the parameters of the sequence processing model 100 (e.g., the adapter layer 106). The sequence processing model 100 (e.g., the adapter layer 106) can be updated based on the determined gradients.

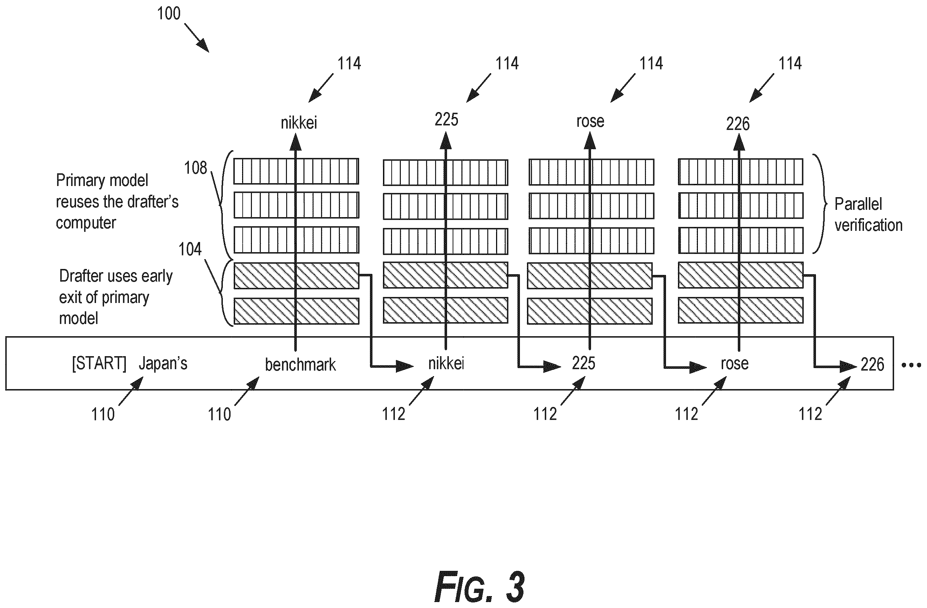

Figure 3 illustrates an example process for deploying the sequence processing model 100 for speculative decoding. For example, the sequence processing model 100 can be deployed for speculative decoding in which the adapter layer 106, the plurality of drafting layers 104, and the plurality of verification layers 108 perform speculative token decoding and the plurality of verification layers 108 perform token verification.

Figure 3 illustrates the sequence processing model 100 operating over a plurality of autoregressive decoding iterations. At each decoding iteration, the sequence processing model 100 can process the current input 110 with the plurality of drafting layers 104 to generate an intermediate representation for the decoding iteration. The sequence processing model 100 can process the intermediate representation for the decoding iteration with the adapter layer 106 to generate a next drafted token 112 for the decoding iteration.

The sequence processing model 100 can add the next drafted token 112 to the current input 110 for a subsequent decoding iteration. Thus, the sequence processing model 100 can autoregressively generate drafted tokens 112 for the plurality of decoding iterations. Each drafted token 112 can be considered as a current input 110 for the subsequent decoding iteration.

At each decoding iteration, the sequence processing model 100 can also store the intermediate representation generated by the drafting layers 104. This stored intermediate representation can later be used as a starting point for the verification layers 108 to perform verification.

For example, either subsequent to or potentially at least partially in parallel with the decoding iterations, the sequence processing model 100 can perform verification of the drafted tokens 112 using the verification layers 108. For example, the sequence processing model 100 can process the respective intermediate representation from each decoding iteration with the plurality of verification layers 108 to generate a plurality of verification tokens 114 respectively for the plurality of decoding iterations. The verification tokens 114 can be used to verify the drafted tokens 112.

In particular, the sequence processing model 100 that implements the sequence processing model 100 can compare the drafted token 112 for each decoding iteration with the verification token 114 for such decoding iteration to identify any disagreements. For example, the sequence processing model 100 can accept all drafted tokens 112 until a disagreement is identified between the drafted tokens 112 and the verification tokens 114.

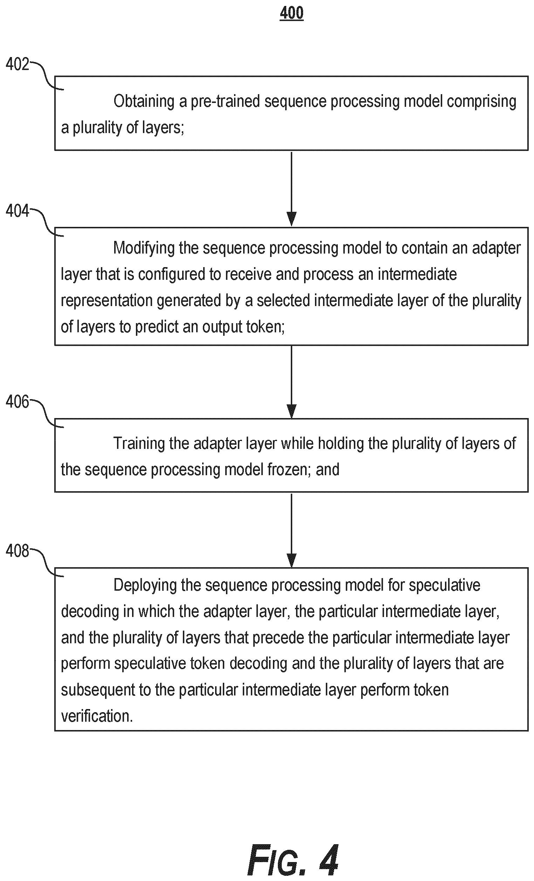

Figure 4 depicts a flow chart diagram of an example method 400 for performing model decoding with reduced latency according to example embodiments of the present disclosure. Although FIG. 4 depicts steps performed in a particular order for purposes of illustration and discussion, the methods of the present disclosure are not limited to the particularly illustrated order or arrangement. The various steps of the method 400 can be omitted, rearranged, combined, and/or adapted in various ways without deviating from the scope of the present disclosure.

Method 400 can begin at 402 where a computing system obtains a pre-trained sequence processing model comprising a plurality of layers. The sequence processing model can be a large language model (LLM), a large multimodal model (LMM) such as a vision-language model (VLM), or any other suitable sequence processing model.

As one example, at 402, obtaining the pre-trained sequence processing model can include accessing the pre-trained sequence processing model from a model repository. As another example, at 402, obtaining the pre-trained sequence processing model can include receiving the pre-trained sequence processing model from a remote computing system via one or more networks. As another example, at 402, obtaining the pre-trained sequence processing model can include generating the pre-trained sequence processing model. For example, at 402, generating the pre-trained sequence processing model can include training the pre-trained sequence processing model using a set of training data. As one example, the set of training data can include a set of training examples. Each training example can include a sequence of tokens and a ground truth token. The model can be trained on the set of training data.

At 404, the computing system modifies the sequence processing model to contain an adapter layer that is configured to receive and process an intermediate representation generated by a particular intermediate layer of the plurality of layers to predict an output token. For example, the adapter layer can be configured to receive and process an intermediate representation generated by a particular intermediate layer of the plurality of layers to predict an output token.

As one example, at 404, modifying the sequence processing model to contain the adapter layer can include inserting the adapter layer into the sequence processing model. As another example, at 404, modifying the sequence processing model to contain the adapter layer can include configuring the adapter layer to receive and process an intermediate representation generated by a particular intermediate layer of the plurality of layers to predict an output token. As another example, at 404, modifying the sequence processing model to contain the adapter layer can include configuring the adapter layer to predict an output token for a current input token.

At 406, the computing system trains the adapter layer while holding the plurality of layers of the sequence processing model frozen. In some implementations, the adapter layer can be fine-tuned or otherwise trained to predict the output token based on the intermediate representation generated by the particular intermediate layer.

As one example, at 406, training the adapter layer can include training the adapter layer using a supervised finetuning loss. As another example, at 406, training the adapter layer can include training the adapter layer using a distillation loss. As another example, at 406, training the adapter layer can include training the adapter layer using an embedding loss. As another example, at 406, training the adapter layer can include training the adapter layer using a combination of a supervised finetuning loss, a distillation loss, and/or an embedding loss.

As one example, at 406, training the adapter layer can include training the adapter layer while holding the plurality of layers of the sequence processing model frozen. This means that the adapter layer can be trained without modifying the plurality of layers of the sequence processing model. In particular, the adapter layer can be trained independently of the plurality of layers of the sequence processing model.

As another example, at 406, training the adapter layer can include training the adapter layer while also training the plurality of layers of the sequence processing model. For example, training the plurality of layers of the sequence processing model can include training the plurality of layers of the sequence processing model using a supervised finetuning loss, a distillation loss, and/or an embedding loss. In some implementations, the adapter layer can be trained concurrently with the plurality of layers of the sequence processing model.

At 408, the computing system deploys the sequence processing model for speculative decoding in which the adapter layer, the particular intermediate layer, and the plurality of layers that precede the particular intermediate layer perform speculative token decoding and the plurality of layers that are subsequent to the particular intermediate layer perform token verification.

As one example, at 408, deploying the sequence processing model can include storing the sequence processing model at a model repository. As another example, at 408, deploying the sequence processing model can include transmitting the sequence processing model to a remote computing system via one or more networks. As another example, at 408, deploying the sequence processing model can include providing the sequence processing model to a client computing device.

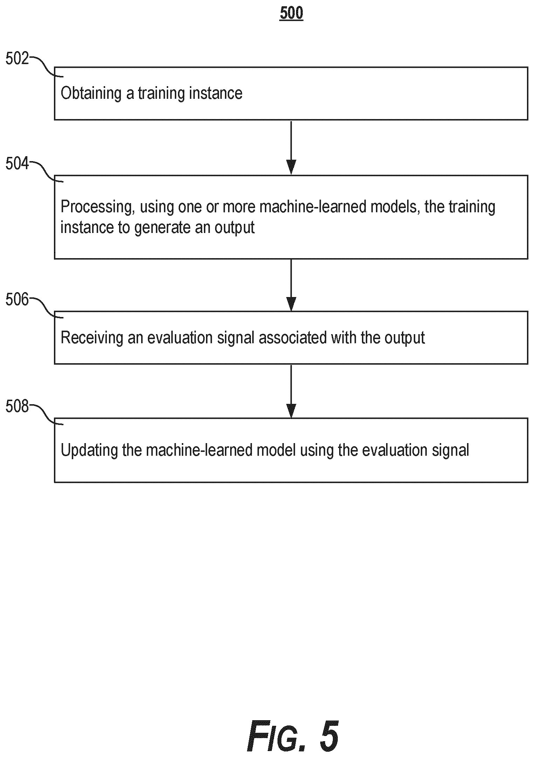

Figure 5 depicts a flowchart of a method 500 for training one or more machine-learned models according to aspects of the present disclosure. For instance, an example machine-learned model can include a sequence processing model configured to perform autoregressive decoding and parallel verification.

One or more portion(s) of example method 500 can be implemented by a computing system that includes one or more computing devices such as, for example, computing systems described with reference to the other figures. Each respective portion of example method 500 can be performed by any (or any combination) of one or more computing devices. Moreover, one or more portion(s) of example method 500 can be implemented on the hardware components of the device(s) described herein, for example, to train one or more systems or models. Figure 5 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 5 is described with reference to elements/terms described with respect to other systems and figures for exemplary illustrated purposes and is not meant to be limiting. One or more portions of example method 500 can be performed additionally, or alternatively, by other systems.

At 502, example method 500 can include obtaining a training instance. A set of training data can include a plurality of training instances divided between multiple datasets (e.g., a training dataset, a validation dataset, or testing dataset). A training instance can be labeled or unlabeled. Although referred to in example method 500 as a "training" instance, it is to be understood that runtime inferences can form training instances when a model is trained using an evaluation of the model's performance on that runtime instance (e.g., online training/learning). Example data types for the training instance and various tasks associated therewith are described throughout the present disclosure.

At 504, example method 500 can include processing, using one or more machine-learned models, the training instance to generate an output. The output can be directly obtained from the one or more machine-learned models or can be a downstream result of a chain of processing operations that includes an output of the one or more machine-learned models.

At 506, example method 500 can include receiving an evaluation signal associated with the output. The evaluation signal can be obtained using a loss function. Various determinations of loss can be used, such as mean squared error, likelihood loss, cross entropy loss, hinge loss, contrastive loss, or various other loss functions. The evaluation signal can be computed using known ground-truth labels (e.g., supervised learning), predicted or estimated labels (e.g., semi- or self-supervised learning), or without labels (e.g., unsupervised learning). The evaluation signal can be a reward (e.g., for reinforcement learning). The reward can be computed using a machine-learned reward model configured to generate rewards based on output(s) received. The reward can be computed using feedback data describing human feedback on the output(s).

At 508, example method 500 can include updating the machine-learned model using the evaluation signal. For example, values for parameters of the machine-learned model(s) can be learned, in some embodiments, using various training or learning techniques, such as, for example, backwards propagation. For example, the evaluation signal can be backpropagated from the output (or another source of the evaluation signal) through the machine-learned model(s) to update one or more parameters of the model(s) (e.g., based on a gradient of the evaluation signal with respect to the parameter value(s)). For example, system(s) containing one or more machine-learned models can be trained in an end-to-end manner. Gradient descent techniques can be used to iteratively update the parameters over a number of training iterations. In some implementations, performing backwards propagation of errors can include performing truncated backpropagation through time. Example method 500 can include implementing a number of generalization techniques (e.g., weight decays, dropouts, etc.) to improve the generalization capability of the models being trained.

In some implementations, example method 500 can be implemented for training a machine-learned model from an initialized state to a fully trained state (e.g., when the model exhibits a desired performance profile, such as based on accuracy, precision, recall, etc.).

In some implementations, example method 500 can be implemented for particular stages of a training procedure. For instance, in some implementations, example method 500 can be implemented for pre-training a machine-learned model. Pre-training can include, for instance, large-scale training over potentially noisy data to achieve a broad base of performance levels across a variety of tasks/data types.

In some implementations, example method 500 can be implemented for fine-tuning a machine-learned model. Fine-tuning can include, for instance, smaller-scale training on higher-quality (e.g., labeled, curated, etc.) data. Fine-tuning can affect all or a portion of the parameters of a machine-learned model. For example, various portions of the machine-learned model can be "frozen" for certain training stages. For example, parameters associated with an embedding space can be "frozen" during fine-tuning (e.g., to retain information learned from a broader domain(s) than present in the fine-tuning dataset(s)). In some implementations, example method 500 uses adapter modules. Adapters can be small trainable layers that are inserted between pre-existing layers of a pre-trained model. During the fine-tuning process, the original parameters of the pre-trained model are typically frozen, and only the parameters of the adapters are updated.

In some implementations, example method 500 can be implemented to execute parameter-efficient fine-tuning methods, such as Layerwise Optimization of Residuals (LoRA). LoRA can refine pre-trained models with minimal adjustments to the original parameters. This can be achieved by introducing trainable low-rank matrices that modify the behavior of the pre-trained weights without directly altering them. In some implementations, during fine-tuning, only these auxiliary matrices are updated, which significantly reduces the number of parameters that are trained.

An example fine-tuning approach includes reinforcement learning. Reinforcement learning can be based on user feedback on model performance during use.

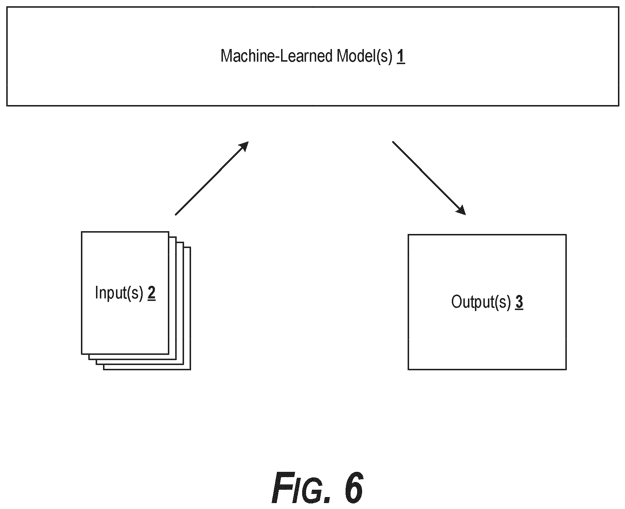

Figure 6 is a block diagram of an example processing flow for using machine-learned model(s) 1 to process input(s) 2 to generate output(s) 3.

Machine-learned model(s) 1 can be or include one or multiple machine-learned models or model components. Example machine-learned models can include neural networks (e.g., deep neural networks). Example machine-learned models can include non-linear models or linear models. Example machine-learned models can use other architectures in lieu of or in addition to neural networks. Example machine-learned models can include decision tree based models, support vector machines, hidden Markov models, Bayesian networks, linear regression models, k-means clustering models, etc.

Machine-learned model(s) 1 can be or include, or otherwise be representative of any one or more of the machine-learned models described above with respect to the preceding figures. For example, machine-learned model(s) 1 can be or include, or otherwise be representative of any one or more of the models described herein, etc. Although various features, variations, and implementations described below are described with respect to machine-learned model(s) 1, it is to be understood that such features, variations, and implementations are to be understood as described with respect to each of the models described herein, etc., any other machine-learned component described herein.

Example neural networks can include feed-forward neural networks, recurrent neural networks (RNNs), including long short-term memory (LSTM) based recurrent neural networks, convolutional neural networks (CNNs), diffusion models, generative-adversarial networks, or other forms of neural networks. Example neural networks can be deep neural networks. Some example machine-learned models can leverage an attention mechanism such as self-attention. For example, some example machine-learned models can include multi-headed self-attention models.

Machine-learned model(s) 1 can include a single or multiple instances of the same model configured to operate on data from input(s) 2. Machine-learned model(s) 1 can include multiple different models or multiple different model portions configured to operate on data from input(s) 2.

Machine-learned model(s) 1 can include an ensemble of different models that can cooperatively interact to process data from input(s) 2. For example, a model ensemble can include multiple models that have different attributes (e.g., different architectures, trained with different recipes, etc.). The ensemble can output an overall output based on the individual outputs of the constituent models. In this manner, for instance, the diverse constituent models can work together to provide system-level robustness by effectively aggregating over individual strengths and weaknesses of any given model. The respective individual outputs can be combined in a weighted combination, using a voting or routing mechanism, or a learned output layer (e.g., one or more feedforward or fully-connected layers).

Machine-learned model(s) 1 can employ a mixture-of-experts structure. *See*, *e.g.*, Zhou et al., Mixture-of-Experts with Expert Choice Routing, ARXIV:2202.09368v2 (Oct. 14, 2022). For example, different portions of a model can learn (explicitly or implicitly) different expertise areas, with pathways through the model being selected by a learned routing mechanism that engages the appropriate expert for a given input (e.g., a given portion of an input, such as on a per-token basis). For example, a feedforward network can be sparsely activated for a given portion of an input based on an output of a routing mechanism that processes the portion of the input. In this manner, for instance, the group of activated weights can form an "expert" that is selected by the router. On each forward pass, only a subset of the total model weights may be engaged, thereby decreasing a quantity of operations performed for processing a given input compared to a densely activated model. In this manner, for instance, the expressive and interpretive power of a high-parameter-count model can be achieved with more compute-efficient forward passes.

Input(s) 2 can generally include or otherwise represent various types of data. Input(s) 2 can include one type or many different types of data. Output(s) 3 can be data of the same type(s) or of different types of data as compared to input(s) 2. Output(s) 3 can include one type or many different types of data.

Example data types for input(s) 2 or output(s) 3 include natural language text data, software code data (e.g., source code, object code, machine code, or any other form of computer-readable instructions or programming languages), machine code data (e.g., binary code, assembly code, or other forms of machine-readable instructions that can be executed directly by a computer's central processing unit), assembly code data (e.g., low-level programming languages that use symbolic representations of machine code instructions to program a processing unit), genetic data or other chemical or biochemical data, image data, audio data, audiovisual data, haptic data, biometric data, medical data, financial data, statistical data, geographical data, astronomical data, historical data, sensor data generally (e.g., digital or analog values, such as voltage or other absolute or relative level measurement values from a real or artificial input, such as from an audio sensor, light sensor, displacement sensor, etc.), and the like. Data can be raw or processed and can be in any format or schema.

In multimodal inputs 2 or outputs 3, example combinations of data types include image data and audio data, image data and natural language data, natural language data and software code data, image data and biometric data, sensor data and medical data, etc. It is to be understood that any combination of data types in an input 2 or an output 3 can be present.

An example input 2 can include one or multiple data types, such as the example data types noted above. An example output 3 can include one or multiple data types, such as the example data types noted above. The data type(s) of input 2 can be the same as or different from the data type(s) of output 3. It is to be understood that the example data types noted above are provided for illustrative purposes only. Data types contemplated within the scope of the present disclosure are not limited to those examples noted above.

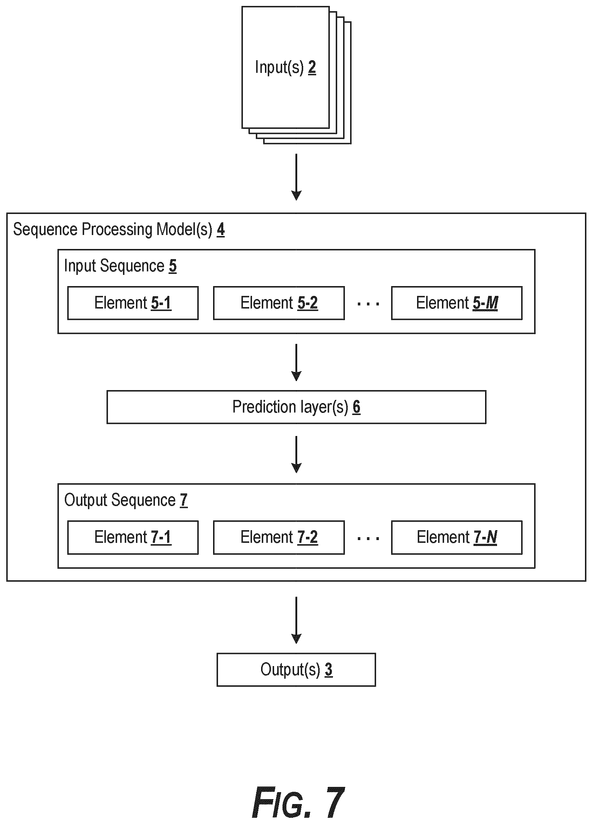

Figure 7 is a block diagram of an example implementation of an example machine-learned model configured to process sequences of information. For instance, an example implementation of machine-learned model(s) 1 can include machine-learned sequence processing model(s) 4. An example system can pass input(s) 2 to sequence processing model(s) 4. Sequence processing model(s) 4 can include one or more machine-learned components. Sequence processing model(s) 4 can process the data from input(s) 2 to obtain an input sequence 5. Input sequence 5 can include one or more input elements 5-1, 5-2, . . . , *5-M*, etc. obtained from input(s) 2. Sequence processing model 4 can process input sequence 5 using prediction layer(s) 6 to generate an output sequence 7. Output sequence 7 can include one or more output elements 7-1, 7-2, ..., 7-N, etc. generated based on input sequence 5. The system can generate output(s) 3 based on output sequence 7.

Sequence processing model(s) 4 can include one or multiple machine-learned model components configured to ingest, generate, or otherwise reason over sequences of information. For example, some example sequence processing models in the text domain are referred to as "Large Language Models," or LLMs. *See*, *e.g.*, PaLM 2 Technical Report, GOOGLE, https://ai.google/static/documents/palm2techreport.pdf (n.d.). Other example sequence processing models can operate in other domains, such as image domains, *see*, *e.g.*, Dosovitskiy et al., An Image is Worth 16x16 Words: Transformers for Image Recognition at Scale, ARXIV:2010.11929v2 (Jun. 3, 2021), audio domains, *see*, *e.g.*, Agostinelli et al., MusicLM: Generating Music From Text, ARXIV:2301.11325v1 (Jan. 26, 2023), biochemical domains, *see*, *e.g*., Jumper et al., Highly accurate protein structure prediction with AlphaFold, 596 Nature 583 (Aug. 26, 2021), by way of example. Sequence processing model(s) 4 can process one or multiple types of data simultaneously. Sequence processing model(s) 4 can include relatively large models (e.g., more parameters, computationally expensive, etc.), relatively small models (e.g., fewer parameters, computationally lightweight, etc.), or both.

In general, sequence processing model(s) 4 can obtain input sequence 5 using data from input(s) 2. For instance, input sequence 5 can include a representation of data from input(s) 2 in a format understood by sequence processing model(s) 4. One or more machine-learned components of sequence processing model(s) 4 can ingest the data from input(s) 2, parse the data into pieces compatible with the processing architectures of sequence processing model(s) 4 (e.g., via "tokenization"), and project the pieces into an input space associated with prediction layer(s) 6 (e.g., via "embedding").

Sequence processing model(s) 4 can ingest the data from input(s) 2 and parse the data into a sequence of elements to obtain input sequence 5. For example, a portion of input data from input(s) 2 can be broken down into pieces that collectively represent the content of the portion of the input data. The pieces can provide the elements of the sequence.

Elements 5-1, 5-2, ..., 5-M can represent, in some cases, building blocks for capturing or expressing meaningful information in a particular data domain. For instance, the elements can describe "atomic units" across one or more domains. For example, for textual input source(s), the elements can correspond to groups of one or more words or sub-word components, such as sets of one or more characters.

For example, elements 5-1, 5-2, . . . , 5-M can represent tokens obtained using a tokenizer. For instance, a tokenizer can process a given portion of an input source and output a series of tokens (e.g., corresponding to input elements 5-1, 5-2, ... , 5-*M*) that represent the portion of the input source. Various approaches to tokenization can be used. For instance, textual input source(s) can be tokenized using a byte-pair encoding (BPE) technique. *See, e.g.,* Kudo et al., SentencePiece: A simple and language independent subword tokenizer and detokenizerfor Neural Text Processing, PROCEEDINGS OF THE 2018 CONFERENCE ON EMPIRICAL METHODS IN NATURAL LANGUAGE PROCESSING (System Demonstrations), pages 66-71 (October 31-November 4, 2018), https://aclanthology.org/D18-2012.pdf. Image-based input source(s) can be tokenized by extracting and serializing patches from an image.

In general, arbitrary data types can be serialized and processed into input sequence 5. It is to be understood that element(s) 5-1, 5-2, ... , 5-M depicted in Figure 7 can be the tokens or can be the embedded representations thereof.

Prediction layer(s) 6 can predict one or more output elements 7-1, 7-2, ... , 7-*N* based on the input elements. Prediction layer(s) 6 can include one or more machine-learned model architectures, such as one or more layers of learned parameters that manipulate and transform the input(s) to extract higher-order meaning from, and relationships between, input element(s) 5-1, 5-2, ..., 5-*M.* In this manner, for instance, example prediction layer(s) 6 can predict new output element(s) in view of the context provided by input sequence 5.

Prediction layer(s) 6 can evaluate associations between portions of input sequence 5 and a particular output element. These associations can inform a prediction of the likelihood that a particular output follows the input context. For example, consider the textual snippet, "The carpenter's toolbox was small and heavy. It was full of __." Example prediction layer(s) 6 can identify that "It" refers back to "toolbox" by determining a relationship between the respective embeddings. Example prediction layer(s) 6 can also link "It" to the attributes of the toolbox, such as "small" and "heavy." Based on these associations, prediction layer(s) 6 can, for instance, assign a higher probability to the word "nails" than to the word "sawdust."

A transformer is an example architecture that can be used in prediction layer(s) 4. *See, e.g.,* Vaswani et al., Attention Is All You Need, ARXIV:1706.03762v7 (Aug. 2, 2023). A transformer is an example of a machine-learned model architecture that uses an attention mechanism to compute associations between items within a context window. The context window can include a sequence that contains input sequence 5 and potentially one or more output element(s) 7-1, 7-2, ... , 7-N. A transformer block can include one or more attention layer(s) and one or more post-attention layer(s) (e.g., feedforward layer(s), such as a multi-layer perceptron).

Prediction layer(s) 6 can include other machine-learned model architectures in addition to or in lieu of transformer-based architectures. For example, recurrent neural networks (RNNs) and long short-term memory (LSTM) models can also be used, as well as convolutional neural networks (CNNs). In general, prediction layer(s) 6 can leverage various kinds of artificial neural networks that can understand or generate sequences of information.

Output sequence 7 can include or otherwise represent the same or different data types as input sequence 5. For instance, input sequence 5 can represent textual data, and output sequence 7 can represent textual data. Input sequence 5 can represent image, audio, or audiovisual data, and output sequence 7 can represent textual data (e.g., describing the image, audio, or audiovisual data). It is to be understood that prediction layer(s) 6, and any other interstitial model components of sequence processing model(s) 4, can be configured to receive a variety of data types in input sequence(s) 5 and output a variety of data types in output sequence(s) 7.

Output sequence 7 can have various relationships to input sequence 5. Output sequence 7 can be a continuation of input sequence 5. Output sequence 7 can be complementary to input sequence 5. Output sequence 7 can translate, transform, augment, or otherwise modify input sequence 5. Output sequence 7 can answer, evaluate, confirm, or otherwise respond to input sequence 5. Output sequence 7 can implement (or describe instructions for implementing) an instruction provided via input sequence 5.

Output sequence 7 can be generated autoregressively. For instance, for some applications, an output of one or more prediction layer(s) 6 can be passed through one or more output layers (e.g., softmax layer) to obtain a probability distribution over an output vocabulary (e.g., a textual or symbolic vocabulary) conditioned on a set of input elements in a context window. In this manner, for instance, output sequence 7 can be autoregressively generated by sampling a likely next output element, adding that element to the context window, and regenerating the probability distribution based on the updated context window, and sampling a likely next output element, and so forth.

Output sequence 7 can also be generated non-autoregressively. For instance, multiple output elements of output sequence 7 can be predicted together without explicit sequential conditioning on each other. *See, e.g.,* Saharia et al., Non-Autoregressive Machine Translation with Latent Alignments, ARXIV:2004.07437v3 (Nov. 16, 2020).

Output sequence 7 can include one or multiple portions or elements. In an example content generation configuration, output sequence 7 can include multiple elements corresponding to multiple portions of a generated output sequence (e.g., a textual sentence, values of a discretized waveform, computer code, etc.). In an example classification configuration, output sequence 7 can include a single element associated with a classification output. For instance, an output "vocabulary" can include a set of classes into which an input sequence is to be classified. For instance, a vision transformer block can pass latent state information to a multilayer perceptron that outputs a likely class value associated with an input image.

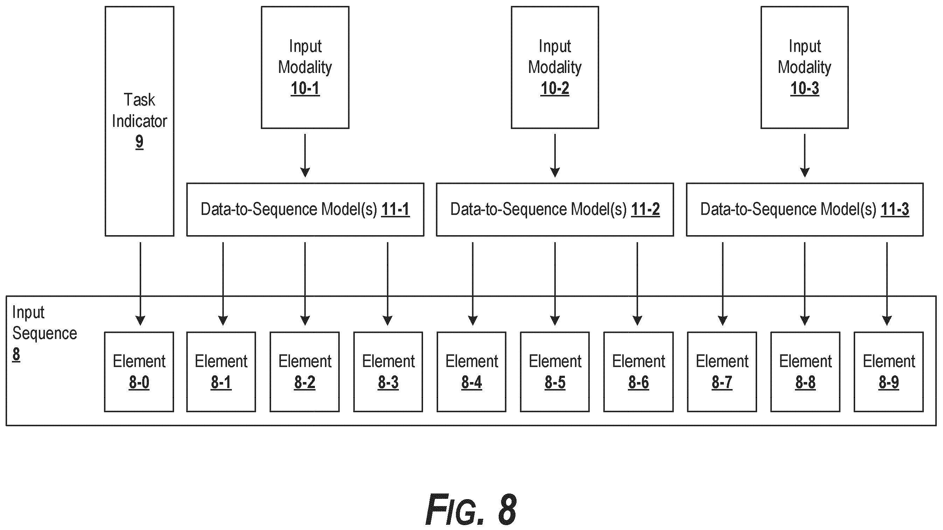

Figure 8 is a block diagram of an example technique for populating an example input sequence 8. Input sequence 8 can include various functional elements that form part of the model infrastructure, such as an element 8-0 obtained from a task indicator 9 that signals to any model(s) that process input sequence 8 that a particular task is being performed (e.g., to help adapt a performance of the model(s) to that particular task). Input sequence 8 can include various data elements from different data modalities. For instance, an input modality 10-1 can include one modality of data. A data-to-sequence model 11-1 can process data from input modality 10-1 to project the data into a format compatible with input sequence 8 (e.g., one or more vectors dimensioned according to the dimensions of input sequence 8) to obtain elements 8-1, 8-2, 8-3. Another input modality 10-2 can include a different modality of data. A data-to-sequence model 11-2 can project data from input modality 10-2 into a format compatible with input sequence 8 to obtain elements 8-4, 8-5, 8-6. Another input modality 10-3 can include yet another different modality of data. A data-to-sequence model 11-3 can project data from input modality 10-3 into a format compatible with input sequence 8 to obtain elements 8-7, 8-8, 8-9.

Input sequence 8 can be the same as or different from input sequence 5. Input sequence 8 can be a multimodal input sequence that contains elements that represent data from different modalities using a common dimensional representation. For instance, an embedding space can have P dimensions. Input sequence 8 can be configured to contain a plurality of elements that have P dimensions. In this manner, for instance, example implementations can facilitate information extraction and reasoning across diverse data modalities by projecting data into elements in the same embedding space for comparison, combination, or other computations therebetween.

For example, elements 8-0, . . . , 8-9 can indicate particular locations within a multidimensional embedding space. Some elements can map to a set of discrete locations in the embedding space. For instance, elements that correspond to discrete members of a predetermined vocabulary of tokens can map to discrete locations in the embedding space that are associated with those tokens. Other elements can be continuously distributed across the embedding space. For instance, some data types can be broken down into continuously defined portions (e.g., image patches) that can be described using continuously distributed locations within the embedding space.

In some implementations, the expressive power of the embedding space may not be limited to meanings associated with any particular set of tokens or other building blocks. For example, a continuous embedding space can encode a spectrum of high-order information. An individual piece of information (e.g., a token) can map to a particular point in that space: for instance, a token for the word "dog" can be projected to an embedded value that points to a particular location in the embedding space associated with canine-related information. Similarly, an image patch of an image of a dog on grass can also be projected into the embedding space. In some implementations, the projection of the image of the dog can be similar to the projection of the word "dog" while also having similarity to a projection of the word "grass," while potentially being different from both. In some implementations, the projection of the image patch may not exactly align with any single projection of a single word. In some implementations, the projection of the image patch can align with a combination of the projections of the words "dog" and "grass." In this manner, for instance, a high-order embedding space can encode information that can be independent of data modalities in which the information is expressed.

Task indicator 9 can include a model or model component configured to identify a task being performed and inject, into input sequence 8, an input value represented by element 8-0 that signals which task is being performed. For instance, the input value can be provided as a data type associated with an input modality and projected along with that input modality (e.g., the input value can be a textual task label that is embedded along with other textual data in the input; the input value can be a pixel-based representation of a task that is embedded along with other image data in the input; etc.). The input value can be provided as a data type that differs from or is at least independent from other input(s). For instance, the input value represented by element 8-0 can be a learned within a continuous embedding space.

Input modalities 10-1, 10-2, and 10-3 can be associated with various different data types (e.g., as described above with respect to input(s) 2 and output(s) 3).

Data-to-sequence models 11-1, 11-2, and 11-3 can be the same or different from each other. Data-to-sequence models 11-1, 11-2, and 11-3 can be adapted to each respective input modality 10-1, 10-2, and 10-3. For example, a textual data-to-sequence model can subdivide a portion of input text and project the subdivisions into element(s) in input sequence 8 (e.g., elements 8-1, 8-2, 8-3, etc.). An image data-to-sequence model can subdivide an input image and project the subdivisions into element(s) in input sequence 8 (e.g., elements 8-4, 8-5, 8-6, etc.). An arbitrary datatype data-to-sequence model can subdivide an input of that arbitrary datatype and project the subdivisions into element(s) in input sequence 8 (e.g., elements 8-7, 8-8, 8-9, etc.).

Data-to-sequence models 11-1, 11-2, and 11-3 can form part of machine-learned sequence processing model(s) 4. Data-to-sequence models 11-1, 11-2, and 11-3 can be jointly trained with or trained independently from machine-learned sequence processing model(s) 4. Data-to-sequence models 11-1, 11-2, and 11-3 can be trained end-to-end with machine-learned sequence processing model(s) 4.

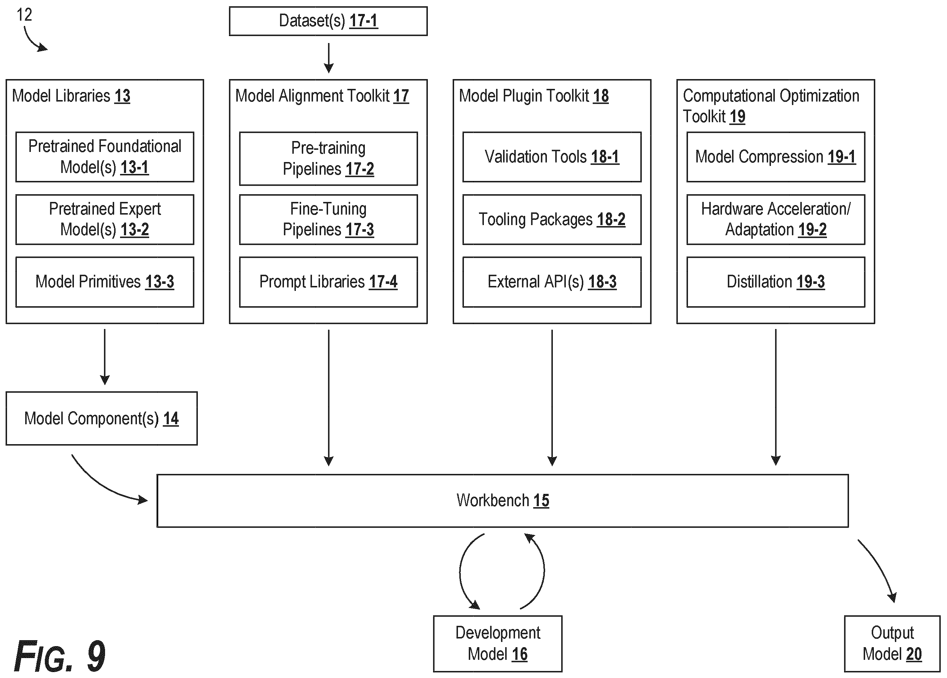

Figure 9 is a block diagram of an example model development platform 12 that can facilitate creation, adaptation, and refinement of example machine-learned models (e.g., machine-learned model(s) 1, sequence processing model(s) 4, etc.). Model development platform 12 can provide a number of different toolkits that developer systems can employ in the development of new or adapted machine-learned models.

Model development platform 12 can provide one or more model libraries 13 containing building blocks for new models. Model libraries 13 can include one or more pre-trained foundational models 13-1, which can provide a backbone of processing power across various tasks. Model libraries 13 can include one or more pre-trained expert models 13-2, which can be focused on performance in particular domains of expertise. Model libraries 13 can include various model primitives 13-3, which can provide low-level architectures or components (optionally pre-trained), which can be assembled in various arrangements as desired. Model primitives 13-3 can include a library of pre-trained adapters or LoRA modules that can adapt a baseline foundational model to align its outputs with a desired performance profile, augment model capabilities (e.g., to adapt to a different input modality, etc.), and the like.

Model development platform 12 can receive selections of various model components 14. Model development platform 12 can pass selected model components 14 to a workbench 15 that combines selected model components 14 into a development model 16.

Workbench 15 can facilitate further refinement and adaptation of development model 16 by leveraging a number of different toolkits integrated with model development platform 12. For example, workbench 15 can facilitate alignment of the development model 16 with a desired performance profile on various tasks using a model alignment toolkit 17.

Model alignment toolkit 17 can provide a number of tools for causing development model 16 to generate outputs aligned with desired behavioral characteristics. Alignment can include increasing an accuracy, precision, recall, etc. of model outputs. Alignment can include enforcing output styles, schema, or other preferential characteristics of model outputs. Alignment can be general or domain-specific. For instance, a pre-trained foundational model 13-1 can begin with an initial level of performance across multiple domains. Alignment of the pre-trained foundational model 13-1 can include improving a performance in a particular domain of information or tasks (e.g., even at the expense of performance in another domain of information or tasks).

Model alignment toolkit 17 can integrate one or more dataset(s) 17-1 for aligning development model 16. Curated dataset(s) 17-1 can include labeled or unlabeled training data. Dataset(s) 17-1 can be obtained from public domain datasets. Dataset(s) 17-1 can be obtained from private datasets associated with one or more developer system(s) for the alignment of bespoke machine-learned model(s) customized for private use-cases.

Pre-training pipelines 17-2 can include a machine-learned model training workflow configured to update development model 16 over large-scale, potentially noisy datasets. For example, pre-training can leverage unsupervised learning techniques (e.g., denoising, etc.) to process large numbers of training instances to update model parameters from an initialized state and achieve a desired baseline performance. Pre-training pipelines 17-2 can leverage unlabeled datasets in dataset(s) 17-1 to perform pre-training. Workbench 15 can implement a pre-training pipeline 17-2 to pre-train development model 16.

Fine-tuning pipelines 17-3 can include a machine-learned model training workflow configured to refine the model parameters of development model 16 with higher-quality data. Fine-tuning pipelines 17-3 can update development model 16 by conducting supervised training with labeled dataset(s) in dataset(s) 17-1. Fine-tuning pipelines 17-3 can update development model 16 by conducting reinforcement learning using reward signals from user feedback signals. Workbench 15 can implement a fine-tuning pipeline 17-3 to fine-tune development model 16.

Prompt libraries 17-4 can include sets of inputs configured to induce behavior aligned with desired performance criteria. Prompt libraries 17-4 can include few-shot prompts (e.g., inputs providing examples of desired model outputs for prepending to a desired runtime query), chain-of-thought prompts (e.g., inputs providing step-by-step reasoning within the exemplars to facilitate thorough reasoning by the model), and the like.

Example prompts can be retrieved from an available repository of prompt libraries 17-4. Example prompts can be contributed by one or more developer systems using workbench 15.

In some implementations, pre-trained or fine-tuned models can achieve satisfactory performance without exemplars in the inputs. For instance, zero-shot prompts can include inputs that lack exemplars. Zero-shot prompts can be within a domain within a training dataset or outside of the training domain(s).

Prompt libraries 17-4 can include one or more prompt engineering tools. Prompt engineering tools can provide workflows for retrieving or learning optimized prompt values. Prompt engineering tools can facilitate directly learning prompt values (e.g., input element values) based one or more training iterations. Workbench 15 can implement prompt engineering tools in development model 16.

Prompt libraries 17-4 can include pipelines for prompt generation. For example, inputs can be generated using development model 16 itself or other machine-learned models. In this manner, for instance, a first model can process information about a task and output a input for a second model to process in order to perform a step of the task. The second model can be the same as or different from the first model. Workbench 15 can implement prompt generation pipelines in development model 16.

Prompt libraries 17-4 can include pipelines for context injection. For instance, a performance of development model 16 on a particular task can improve if provided with additional context for performing the task. Prompt libraries 17-4 can include software components configured to identify desired context, retrieve the context from an external source (e.g., a database, a sensor, etc.), and add the context to the input prompt. Workbench 15 can implement context injection pipelines in development model 16.

Although various training examples described herein with respect to model development platform 12 refer to "pre-training" and "fine-tuning," it is to be understood that model alignment toolkit 17 can generally support a wide variety of training techniques adapted for training a wide variety of machine-learned models. Example training techniques can correspond to the example training method 500 described above.

Model development platform 12 can include a model plugin toolkit 18. Model plugin toolkit 18 can include a variety of tools configured for augmenting the functionality of a machine-learned model by integrating the machine-learned model with other systems, devices, and software components. For instance, a machine-learned model can use tools to increase performance quality where appropriate. For instance, deterministic tasks can be offloaded to dedicated tools in lieu of probabilistically performing the task with an increased risk of error. For instance, instead of autoregressively predicting the solution to a system of equations, a machine-learned model can recognize a tool to call for obtaining the solution and pass the system of equations to the appropriate tool. The tool can be a traditional system of equations solver that can operate deterministically to resolve the system of equations. The output of the tool can be returned in response to the original query. In this manner, tool use can allow some example models to focus on the strengths of machine-learned models-e.g., understanding an intent in an unstructured request for a task-while augmenting the performance of the model by offloading certain tasks to a more focused tool for rote application of deterministic algorithms to a well-defined problem.

Model plugin toolkit 18 can include validation tools 18-1. Validation tools 18-1 can include tools that can parse and confirm output(s) of a machine-learned model. Validation tools 18-1 can include engineered heuristics that establish certain thresholds applied to model outputs. For example, validation tools 18-1 can ground the outputs of machine-learned models to structured data sources (e.g., to mitigate "hallucinations").

Model plugin toolkit 18 can include tooling packages 18-2 for implementing one or more tools that can include scripts or other executable code that can be executed alongside development model 16. Tooling packages 18-2 can include one or more inputs configured to cause machine-learned model(s) to implement the tools (e.g., few-shot prompts that induce a model to output tool calls in the proper syntax, etc.). Tooling packages 18-2 can include, for instance, fine-tuning training data for training a model to use a tool.

Model plugin toolkit 18 can include interfaces for calling external application programming interfaces (APIs) 18-3. For instance, in addition to or in lieu of implementing tool calls or tool code directly with development model 16, development model 16 can be aligned to output instruction that initiate API calls to send or obtain data via external systems.

Model plugin toolkit 18 can integrate with prompt libraries 17-4 to build a catalog of available tools for use with development model 16. For instance, a model can receive, in an input, a catalog of available tools, and the model can generate an output that selects a tool from the available tools and initiates a tool call for using the tool.

Model development platform 12 can include a computational optimization toolkit 19 for optimizing a computational performance of development model 16. For instance, tools for model compression 19-1 can allow development model 16 to be reduced in size while maintaining a desired level of performance. For instance, model compression 19-1 can include quantization workflows, weight pruning and sparsification techniques, etc. Tools for hardware acceleration 19-2 can facilitate the configuration of the model storage and execution formats to operate optimally on different hardware resources. For instance, hardware acceleration 19-2 can include tools for optimally sharding models for distributed processing over multiple processing units for increased bandwidth, lower unified memory requirements, etc. Tools for distillation 19-3 can provide for the training of lighter-weight models based on the knowledge encoded in development model 16. For instance, development model 16 can be a highly performant, large machine-learned model optimized using model development platform 12. To obtain a lightweight model for running in resource-constrained environments, a smaller model can be a "student model" that learns to imitate development model 16 as a "teacher model." **In** this manner, for instance, the investment in learning the parameters and configurations of development model 16 can be efficiently transferred to a smaller model for more efficient inference.

Workbench 15 can implement one, multiple, or none of the toolkits implemented in model development platform 12. Workbench 15 can output an output model 20 based on development model 16. Output model 20 can be a deployment version of development model 16. Output model 20 can be a development or training checkpoint of development model 16. Output model 20 can be a distilled, compressed, or otherwise optimized version of development model 16.

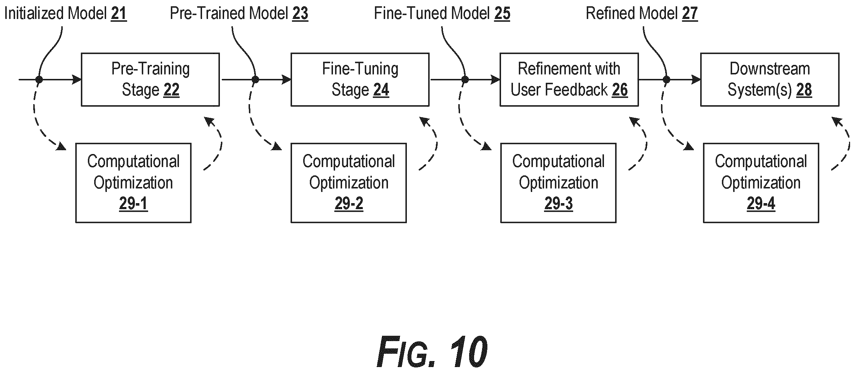

Figure 10 is a block diagram of an example training flow for training a machine-learned development model 16. One or more portion(s) of the example training flow can be implemented by a computing system that includes one or more computing devices such as, for example, computing systems described with reference to the other figures. Each respective portion of the example training flow can be performed by any (or any combination) of one or more computing devices. Moreover, one or more portion(s) of the example training flow can be implemented on the hardware components of the device(s) described herein, for example, to train one or more systems or models. FIG. 10 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. FIG. 10 is described with reference to elements/terms described with respect to other systems and figures for exemplary illustrated purposes and is not meant to be limiting. One or more portions of the example training flow can be performed additionally, or alternatively, by other systems.

Initially, development model 16 can persist in an initial state as an initialized model 21. Development model 16 can be initialized with weight values. Initial weight values can be random or based on an initialization schema. Initial weight values can be based on prior pre-training for the same or for a different model.

Initialized model 21 can undergo pre-training in a pre-training stage 22. Pre-training stage 22 can be implemented using one or more pre-training pipelines 17-2 over data from dataset(s) 17-1. Pre-training can be omitted, for example, if initialized model 21 is already pre-trained (e.g., development model 16 contains, is, or is based on a pre-trained foundational model or an expert model).

Pre-trained model 23 can then be a new version of development model 16, which can persist as development model 16 or as a new development model. Pre-trained model 23 can be the initial state if development model 16 was already pre-trained. Pre-trained model 23 can undergo fine-tuning in a fine-tuning stage 24. Fine-tuning stage 24 can be implemented using one or more fine-tuning pipelines 17-3 over data from dataset(s) 17-1. Fine-tuning can be omitted, for example, if a pre-trained model as satisfactory performance, if the model was already fine-tuned, or if other tuning approaches are preferred.

Fine-tuned model 29 can then be a new version of development model 16, which can persist as development model 16 or as a new development model. Fine-tuned model 29 can be the initial state if development model 16 was already fine-tuned. Fine-tuned model 29 can undergo refinement with user feedback 26. For instance, refinement with user feedback 26 can include reinforcement learning, optionally based on human feedback from human users of fine-tuned model 25. As reinforcement learning can be a form of fine-tuning, it is to be understood that fine-tuning stage 24 can subsume the stage for refining with user feedback 26. Refinement with user feedback 26 can produce a refined model 27. Refined model 27 can be output to downstream system(s) 28 for deployment or further development.

In some implementations, computational optimization operations can be applied before, during, or after each stage. For instance, initialized model 21 can undergo computational optimization 29-1 (e.g., using computational optimization toolkit 19) before pre-training stage 22. Pre-trained model 23 can undergo computational optimization 29-2 (e.g., using computational optimization toolkit 19) before fine-tuning stage 24. Fine-tuned model 25 can undergo computational optimization 29-3 (e.g., using computational optimization toolkit 19) before refinement with user feedback 26. Refined model 27 can undergo computational optimization 29-4 (e.g., using computational optimization toolkit 19) before output to downstream system(s) 28. Computational optimization(s) 29-1, ... , 29-4 can all be the same, all be different, or include at least some different optimization techniques.

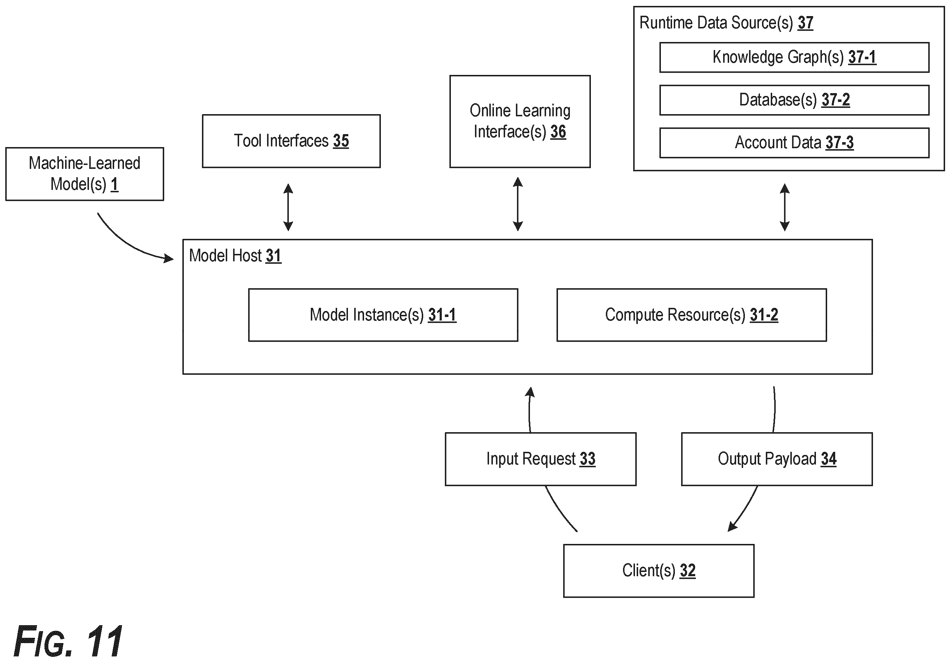

Figure 11 is a block diagram of an inference system for operating one or more machine-learned model(s) 1 to perform inference (e.g., for training, for deployment, etc.). A model host 31 can receive machine-learned model(s) 1. Model host 31 can host one or more model instance(s) 31-1, which can be one or multiple instances of one or multiple models. Model host 31 can host model instance(s) 31-1 using available compute resources 31-2 associated with model host 31.

Model host 31 can perform inference on behalf of one or more client(s) 32. Client(s) 32 can transmit an input request 33 to model host 31. Using input request 33, model host 31 can obtain input(s) 2 for input to machine-learned model(s) 1. Machine-learned model(s) 1 can process input(s) 2 to generate output(s) 3. Using output(s) 3, model host 31 can return an output payload 34 for responding to input request 33 from client(s) 32. Output payload 34 can include or be based on output(s) 3.

Model host 31 can leverage various other resources and tools to augment the inference task. For instance, model host 31 can communicate with tool interfaces 35 to facilitate tool use by model instance(s) 31-1. Tool interfaces 35 can include local or remote APIs. Tool interfaces 35 can include integrated scripts or other software functionality. Model host 31 can engage online learning interface(s) 36 to facilitate ongoing improvements to machine-learned model(s) 1. For instance, online learning interface(s) 36 can be used within reinforcement learning loops to retrieve user feedback on inferences served by model host 31. Model host 31 can access runtime data source(s) 37 for augmenting input(s) 2 with additional contextual information. For instance, runtime data source(s) 37 can include a knowledge graph 37-1 that facilitates structured information retrieval for information associated with input request(s) 33 (e.g., a search engine service). Runtime data source(s) 37 can include public or private, external or local database(s) 37-2 that can store information associated with input request(s) 33 for augmenting input(s) 2. Runtime data source(s) 37 can include account data 37-3 which can be retrieved in association with a user account corresponding to a client 32 for customizing the behavior of model host 31 accordingly.

Model host 31 can be implemented by one or multiple computing devices or systems. Client(s) 2 can be implemented by one or multiple computing devices or systems, which can include computing devices or systems shared with model host 31.

For example, model host 31 can operate on a server system that provides a machine-learning service to client device(s) that operate client(s) 32 (e.g., over a local or wide-area network). Client device(s) can be end-user devices used by individuals. Client device(s) can be server systems that operate client(s) 32 to provide various functionality as a service to downstream end-user devices.

In some implementations, model host 31 can operate on a same device or system as client(s) 32. Model host 31 can be a machine-learning service that runs on-device to provide machine-learning functionality to one or multiple applications operating on a client device, which can include an application implementing client(s) 32. Model host 31 can be a part of a same application as client(s) 32. For instance, model host 31 can be a subroutine or method implemented by one part of an application, and client(s) 32 can be another subroutine or method that engages model host 31 to perform inference functions within the application. It is to be understood that model host 31 and client(s) 32 can have various different configurations.

Model instance(s) 31-1 can include one or more machine-learned models that are available for performing inference. Model instance(s) 31-1 can include weights or other model components that are stored on in persistent storage, temporarily cached, or loaded into highspeed memory. Model instance(s) 31-1 can include multiple instance(s) of the same model (e.g., for parallel execution of more requests on the same model). Model instance(s) 31-1 can include instance(s) of different model(s). Model instance(s) 31-1 can include cached intermediate states of active or inactive model(s) used to accelerate inference of those models. For instance, an inference session with a particular model may generate significant amounts of computational results that can be re-used for future inference runs (e.g., using a KV cache for transformer-based models). These computational results can be saved in association with that inference session so that session can be executed more efficiently when resumed.

Compute resource(s) 31-2 can include one or more processors (central processing units, graphical processing units, tensor processing units, machine-learning accelerators, etc.) connected to one or more memory devices. Compute resource(s) 31-2 can include a dynamic pool of available resources shared with other processes. Compute resource(s) 31-2 can include memory devices large enough to fit an entire model instance in a single memory instance. Compute resource(s) 31-2 can also shard model instance(s) across multiple memory devices (e.g., using data parallelization or tensor parallelization, etc.). This can be done to increase parallelization or to execute a large model using multiple memory devices which individually might not be able to fit the entire model into memory.

Input request 33 can include data for input(s) 2. Model host 31 can process input request 33 to obtain input(s) 2. Input(s) 2 can be obtained directly from input request 33 or can be retrieved using input request 33. Input request 33 can be submitted to model host 31 via an API.

Model host 31 can perform inference over batches of input requests 33 in parallel. For instance, a model instance 31-1 can be configured with an input structure that has a batch dimension. Separate input(s) 2 can be distributed across the batch dimension (e.g., rows of an array). The separate input(s) 2 can include completely different contexts. The separate input(s) 2 can be multiple inference steps of the same task. The separate input(s) 2 can be staggered in an input structure, such that any given inference cycle can be operating on different portions of the respective input(s) 2. In this manner, for instance, model host 31 can perform inference on the batch in parallel, such that output(s) 3 can also contain the batch dimension and return the inference results for the batched input(s) 2 in parallel. In this manner, for instance, batches of input request(s) 33 can be processed in parallel for higher throughput of output payload(s) 34.

Output payload 34 can include or be based on output(s) 3 from machine-learned model(s) 1. Model host 31 can process output(s) 3 to obtain output payload 34. This can include chaining multiple rounds of inference (e.g., iteratively, recursively, across the same model(s) or different model(s)) to arrive at a final output for a task to be returned in output payload 34. Output payload 34 can be transmitted to client(s) 32 via an API.

Online learning interface(s) 36 can facilitate reinforcement learning of machine-learned model(s) 1. Online learning interface(s) 36 can facilitate reinforcement learning with human feedback (RLHF). Online learning interface(s) 36 can facilitate federated learning of machine-learned model(s) 1.

Model host 31 can access a library of pre-trained adapters or LoRA modules that can adapt a baseline model to align its outputs with a desired performance profile, augment model capabilities (e.g., to adapt to a different input modality, etc.), and the like. For instance, model host 31 can receive an input request to load a customized model, and model host 31 can retrieve one or more components to adapt a baseline model to the custom profile. Model host 31 can determine that a particular functionality is needed for a particular task (e.g., based on an output of a model that preprocesses an input) and retrieve a pre-trained component accordingly.

Model host 31 can execute machine-learned model(s) 1 to perform inference for various tasks using various types of data. For example, various different input(s) 2 and output(s) 3 can be used for various different tasks. In some implementations, input(s) 2 can be or otherwise represent image data. Machine-learned model(s) 1 can process the image data to generate an output. As an example, machine-learned model(s) 1 can process the image data to generate an image recognition output (e.g., a recognition of the image data, a latent embedding of the image data, an encoded representation of the image data, a hash of the image data, etc.). As another example, machine-learned model(s) 1 can process the image data to generate an image segmentation output. As another example, machine-learned model(s) 1 can process the image data to generate an image classification output. As another example, machine-learned model(s) 1 can process the image data to generate an image data modification output (e.g., an alteration of the image data, etc.). As another example, machine-learned model(s) 1 can process the image data to generate an encoded image data output (e.g., an encoded and/or compressed representation of the image data, etc.). As another example, machine-learned model(s) 1 can process the image data to generate an upscaled image data output. As another example, machine-learned model(s) 1 can process the image data to generate a prediction output.

In some implementations, the task is a computer vision task. In some cases, input(s) 2 includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some implementations, input(s) 2 can be or otherwise represent natural language data. Machine-learned model(s) 1 can process the natural language data to generate an output. As an example, machine-learned model(s) 1 can process the natural language data to generate a language encoding output. As another example, machine-learned model(s) 1 can process the natural language data to generate a latent text embedding output. As another example, machine-learned model(s) 1 can process the natural language data to generate a translation output. As another example, machine-learned model(s) 1 can process the natural language data to generate a classification output. As another example, machine-learned model(s) 1 can process the natural language data to generate a textual segmentation output. As another example, machine-learned model(s) 1 can process the natural language data to generate a semantic intent output. As another example, machine-learned model(s) 1 can process the natural language data to generate an upscaled text or natural language output (e.g., text or natural language data that is higher quality than the input text or natural language, etc.). As another example, machine-learned model(s) 1 can process the natural language data to generate a prediction output (e.g., one or more predicted next portions of natural language content).

In some implementations, input(s) 2 can be or otherwise represent speech data (e.g., data describing spoken natural language, such as audio data, textual data, etc.). Machine-learned model(s) 1 can process the speech data to generate an output. As an example, machine-learned model(s) 1 can process the speech data to generate a speech recognition output. As another example, machine-learned model(s) 1 can process the speech data to generate a speech translation output. As another example, machine-learned model(s) 1 can process the speech data to generate a latent embedding output. As another example, machine-learned model(s) 1 can process the speech data to generate an encoded speech output (e.g., an encoded and/or compressed representation of the speech data, etc.). As another example, machine-learned model(s) 1 can process the speech data to generate an upscaled speech output (e.g., speech data that is higher quality than the input speech data, etc.). As another example, machine-learned model(s) 1 can process the speech data to generate a textual representation output (e.g., a textual representation of the input speech data, etc.). As another example, machine-learned model(s) 1 can process the speech data to generate a prediction output.

In some implementations, input(s) 2 can be or otherwise represent latent encoding data (e.g., a latent space representation of an input, etc.). Machine-learned model(s) 1 can process the latent encoding data to generate an output. As an example, machine-learned model(s) 1 can process the latent encoding data to generate a recognition output. As another example, machine-learned model(s) 1 can process the latent encoding data to generate a reconstruction output. As another example, machine-learned model(s) 1 can process the latent encoding data to generate a search output. As another example, machine-learned model(s) 1 can process the latent encoding data to generate a reclustering output. As another example, machine-learned model(s) 1 can process the latent encoding data to generate a prediction output.

In some implementations, input(s) 2 can be or otherwise represent statistical data. Statistical data can be, represent, or otherwise include data computed and/or calculated from some other data source. Machine-learned model(s) 1 can process the statistical data to generate an output. As an example, machine-learned model(s) 1 can process the statistical data to generate a recognition output. As another example, machine-learned model(s) 1 can process the statistical data to generate a prediction output. As another example, machine-learned model(s) 1 can process the statistical data to generate a classification output. As another example, machine-learned model(s) 1 can process the statistical data to generate a segmentation output. As another example, machine-learned model(s) 1 can process the statistical data to generate a visualization output. As another example, machine-learned model(s) 1 can process the statistical data to generate a diagnostic output.

In some implementations, input(s) 2 can be or otherwise represent sensor data. Machine-learned model(s) 1 can process the sensor data to generate an output. As an example, machine-learned model(s) 1 can process the sensor data to generate a recognition output. As another example, machine-learned model(s) 1 can process the sensor data to generate a prediction output. As another example, machine-learned model(s) 1 can process the sensor data to generate a classification output. As another example, machine-learned model(s) 1 can process the sensor data to generate a segmentation output. As another example, machine-learned model(s) 1 can process the sensor data to generate a visualization output. As another example, machine-learned model(s) 1 can process the sensor data to generate a diagnostic output. As another example, machine-learned model(s) 1 can process the sensor data to generate a detection output.

In some implementations, machine-learned model(s) 1 can be configured to perform a task that includes encoding input data for reliable and/or efficient transmission or storage (and/or corresponding decoding). For example, the task may be an audio compression task. The input may include audio data and the output may comprise compressed audio data. In another example, the input includes visual data (e.g. one or more images or videos), the output comprises compressed visual data, and the task is a visual data compression task. In another example, the task may comprise generating an embedding for input data (e.g. input audio or visual data). In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

In some implementations, the task is a generative task, and machine-learned model(s) 1 can be configured to output content generated in view of input(s) 2. For instance, input(s) 2 can be or otherwise represent data of one or more modalities that encodes context for generating additional content.

In some implementations, the task can be a text completion task. Machine-learned model(s) 1 can be configured to process input(s) 2 that represent textual data and to generate output(s) 3 that represent additional textual data that completes a textual sequence that includes input(s) 2. For instance, machine-learned model(s) 1 can be configured to generate output(s) 3 to complete a sentence, paragraph, or portion of text that follows from a portion of text represented by input(s) 2.

In some implementations, the task can be an instruction following task. Machine-learned model(s) 1 can be configured to process input(s) 2 that represent instructions to perform a function and to generate output(s) 3 that advance a goal of satisfying the instruction function (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the instructions (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the instructions (e.g., natural language responses, programming language responses, machine language responses, etc.). One or more output(s) 3 can be iteratively or recursively generated to sequentially process and accomplish steps toward accomplishing the requested functionality. For instance, an initial output can be executed by an external system or be processed by machine-learned model(s) 1 to complete an initial step of performing a function. Multiple steps can be performed, with a final output being obtained that is responsive to the initial instructions.

In some implementations, the task can be a question answering task. Machine-learned model(s) 1 can be configured to process input(s) 2 that represent a question to answer and to generate output(s) 3 that advance a goal of returning an answer to the question (e.g., at least a step of a multi-step procedure to perform the function). Output(s) 3 can represent data of the same or of a different modality as input(s) 2. For instance, input(s) 2 can represent textual data (e.g., natural language instructions for a task to be performed) and machine-learned model(s) 1 can process input(s) 2 to generate output(s) 3 that represent textual data responsive to the question (e.g., natural language responses, programming language responses, machine language responses, etc.). Input(s) 2 can represent image data (e.g., image-based instructions for a task to be performed, optionally accompanied by textual instructions) and machine-learned model(s) 1 can process input(s) 2 to generate output(s) 3 that represent textual data responsive to the question (e.g., natural language responses, programming language responses, machine language responses, etc.). One or more output(s) 3 can be iteratively or recursively generated to sequentially process and accomplish steps toward answering the question. For instance, an initial output can be executed by an external system or be processed by machine-learned model(s) 1 to complete an initial step of obtaining an answer to the question (e.g., querying a database, performing a computation, executing a script, etc.). Multiple steps can be performed, with a final output being obtained that is responsive to the question.

In some implementations, the task can be an image generation task. Machine-learned model(s) 1 can be configured to process input(s) 2 that represent context regarding a desired portion of image content. The context can include text data, image data, audio data, etc. Machine-learned model(s) 1 can be configured to generate output(s) 3 that represent image data that depicts imagery related to the context. For instance, machine-learned model(s) 1 can be configured to generate pixel data of an image. Values for channel(s) associated with the pixels in the pixel data can be selected based on the context (e.g., based on a probability determined based on the context).

In some implementations, the task can be an audio generation task. Machine-learned model(s) 1 can be configured to process input(s) 2 that represent context regarding a desired portion of audio content. The context can include text data, image data, audio data, etc. Machine-learned model(s) 1 can be configured to generate output(s) 3 that represent audio data related to the context. For instance, machine-learned model(s) 1 can be configured to generate waveform data in the form of an image (e.g., a spectrogram). Values for channel(s) associated with pixels of the image can be selected based on the context. Machine-learned model(s) 1 can be configured to generate waveform data in the form of a sequence of discrete samples of a continuous waveform. Values of the sequence can be selected based on the context (e.g., based on a probability determined based on the context).

In some implementations, the task can be a data generation task. Machine-learned model(s) 1 can be configured to process input(s) 2 that represent context regarding a desired portion of data (e.g., data from various data domains, such as sensor data, image data, multimodal data, statistical data, etc.). The desired data can be, for instance, synthetic data for training other machine-learned models. The context can include arbitrary data type(s). Machine-learned model(s) 1 can be configured to generate output(s) 3 that represent data that aligns with the desired data. For instance, machine-learned model(s) 1 can be configured to generate data values for populating a dataset. Values for the data object(s) can be selected based on the context (e.g., based on a probability determined based on the context).

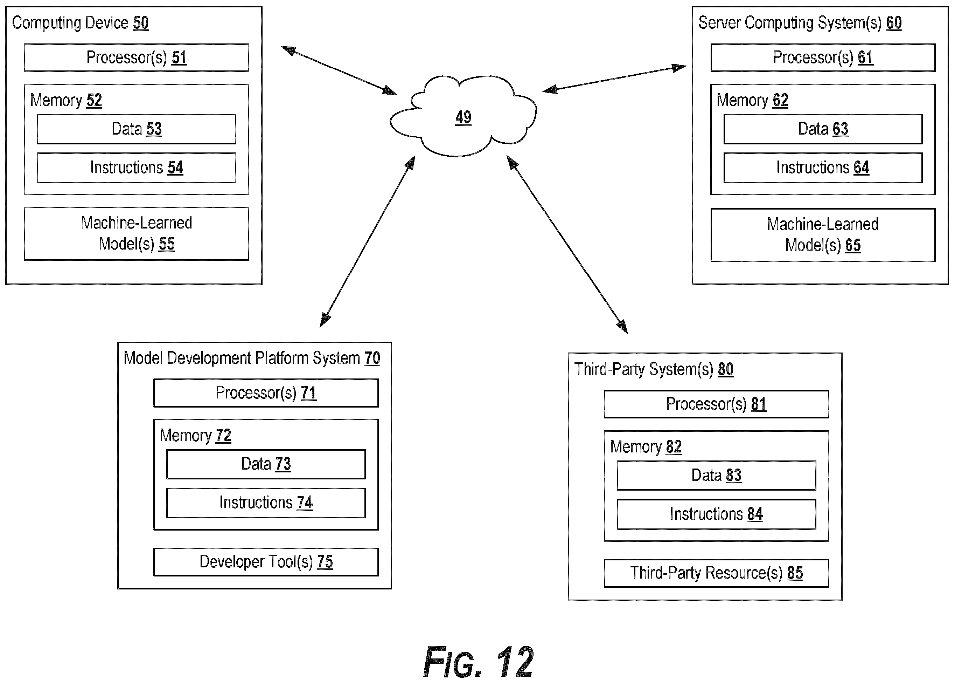

Figure 12 is a block diagram of an example networked computing system that can perform aspects of example implementations of the present disclosure. The system can include a number of computing devices and systems that are communicatively coupled over a network 49. An example computing device 50 is described to provide an example of a computing device that can perform any aspect of the present disclosure (e.g., implementing model host 31, client(s) 32, or both). An example server computing system 60 is described as an example of a server computing system that can perform any aspect of the present disclosure (e.g., implementing model host 31, client(s) 32, or both). Computing device 50 and server computing system(s) 60 can cooperatively interact (e.g., over network 49) to perform any aspect of the present disclosure (e.g., implementing model host 31, client(s) 32, or both). Model development platform system 70 is an example system that can host or serve model development platform(s) 12 for development of machine-learned models. Third-party system(s) 80 are example system(s) with which any of computing device 50, server computing system(s) 60, or model development platform system(s) 70 can interact in the performance of various aspects of the present disclosure (e.g., engaging third-party tools, accessing third-party databases or other resources, etc.).

Network 49 can be any type of communications network, such as a local area network (e.g., intranet), wide area network (e.g., Internet), or some combination thereof and can include any number of wired or wireless links. In general, communication over network 49 can be carried via any type of wired or wireless connection, using a wide variety of communication protocols (e.g., TCP/IP, HTTP, SMTP, FTP), encodings or formats (e.g., HTML, XML), or protection schemes (e.g., VPN, secure HTTP, SSL). Network 49 can also be implemented via a system bus. For instance, one or more devices or systems of Figure 12 can be co-located with, contained by, or otherwise integrated into one or more other devices or systems.

Computing device 50 can be any type of computing device, such as, for example, a personal computing device (e.g., laptop or desktop), a mobile computing device (e.g., smartphone or tablet), a gaming console or controller, a wearable computing device, an embedded computing device, a server computing device, a virtual machine operating on a host device, or any other type of computing device. Computing device 50 can be a client computing device. Computing device 50 can be an end-user computing device. Computing device 50 can be a computing device of a service provided that provides a service to an end user (who may use another computing device to interact with computing device 50).

Computing device 50 can include one or more processors 51 and a memory 52. Processor(s) 51 can be any suitable processing device (e.g., a processor core, a microprocessor, an ASIC, an FPGA, a controller, a microcontroller, etc.) and can be one processor or a plurality of processors that are operatively connected. Memory 52 can include one or more non-transitory computer-readable storage media, such as HBM, RAM, ROM, EEPROM, EPROM, flash memory devices, magnetic disks, etc., and combinations thereof. Memory 52 can store data 53 and instructions 54 which can be executed by processor(s) 51 to cause computing device 50 to perform operations. The operations can implement any one or multiple features described herein. The operations can implement example methods and techniques described herein.

Computing device 50 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input.

Computing device 50 can store or include one or more machine-learned models 55. Machine-learned models 55 can include one or more machine-learned model(s) 1, such as a sequence processing model 4. Machine-learned models 55 can include one or multiple model instance(s) 31-1. Machine-learned model(s) 55 can be received from server computing system(s) 60, model development platform system 70, third party system(s) 80 (e.g., an application distribution platform), or developed locally on computing device 50. Machine-learned model(s) 55 can be loaded into memory 52 and used or otherwise implemented by processor(s) 51. Computing device 50 can implement multiple parallel instances of machine-learned model(s) 55.

Server computing system(s) 60 can include one or more processors 61 and a memory 62. Processor(s) 61 can be any suitable processing device (e.g., a processor core, a microprocessor, an ASIC, an FPGA, a controller, a microcontroller, etc.) and can be one processor or a plurality of processors that are operatively connected. Memory 62 can include one or more non-transitory computer-readable storage media, such as HBM, RAM, ROM, EEPROM, EPROM, flash memory devices, magnetic disks, etc., and combinations thereof. Memory 62 can store data 63 and instructions 64 which can be executed by processor(s) 61 to cause server computing system(s) 60 to perform operations. The operations can implement any one or multiple features described herein. The operations can implement example methods and techniques described herein.

In some implementations, server computing system 60 includes or is otherwise implemented by one or multiple server computing devices. In instances in which server computing system 60 includes multiple server computing devices, such server computing devices can operate according to sequential computing architectures, parallel computing architectures, or some combination thereof.

Server computing system 60 can store or otherwise include one or more machine-learned models 65. Machine-learned model(s) 65 can be the same as or different from machine-learned model(s) 55. Machine-learned models 65 can include one or more machine-learned model(s) 1, such as a sequence processing model 4. Machine-learned models 65 can include one or multiple model instance(s) 31-1. Machine-learned model(s) 65 can be received from computing device 50, model development platform system 70, third party system(s) 80, or developed locally on server computing system(s) 60. Machine-learned model(s) 65 can be loaded into memory 62 and used or otherwise implemented by processor(s) 61. Server computing system(s) 60 can implement multiple parallel instances of machine-learned model(s) 65.

In an example configuration, machine-learned models 65 can be included in or otherwise stored and implemented by server computing system 60 to establish a client-server relationship with computing device 50 for serving model inferences. For instance, server computing system(s) 60 can implement model host 31 on behalf of client(s) 32 on computing device 50. For instance, machine-learned models 65 can be implemented by server computing system 60 as a portion of a web service (e.g., remote machine-learned model hosting service, such as an online interface for performing machine-learned model operations over a network on server computing system(s) 60). For instance, server computing system(s) 60 can communicate with computing device 50 over a local intranet or internet connection. For instance, computing device 50 can be a workstation or endpoint in communication with server computing system(s) 60, with implementation of machine-learned models 65 being managed by server computing system(s) 60 to remotely perform inference (e.g., for runtime or training operations), with output(s) returned (e.g., cast, streamed, etc.) to computing device 50. Machine-learned models 65 can work cooperatively or interoperatively with machine-learned models 55 on computing device 50 to perform various tasks.

Model development platform system(s) 70 can include one or more processors 71 and a memory 72. Processor(s) 71 can be any suitable processing device (e.g., a processor core, a microprocessor, an ASIC, an FPGA, a controller, a microcontroller, etc.) and can be one processor or a plurality of processors that are operatively connected. Memory 72 can include one or more non-transitory computer-readable storage media, such as HBM, RAM, ROM, EEPROM, EPROM, flash memory devices, magnetic disks, etc., and combinations thereof. Memory 72 can store data 73 and instructions 74 which can be executed by processor(s) 71 to cause model development platform system(s) 70 to perform operations. The operations can implement any one or multiple features described herein. The operations can implement example methods and techniques described herein. Example operations include the functionality described herein with respect to model development platform 12. This and other functionality can be implemented by developer tool(s) 75.

Third-party system(s) 80 can include one or more processors 81 and a memory 82. Processor(s) 81 can be any suitable processing device (e.g., a processor core, a microprocessor, an ASIC, an FPGA, a controller, a microcontroller, etc.) and can be one processor or a plurality of processors that are operatively connected. Memory 82 can include one or more non-transitory computer-readable storage media, such as HBM, RAM, ROM, EEPROM, EPROM, flash memory devices, magnetic disks, etc., and combinations thereof. Memory 82 can store data 83 and instructions 84 which can be executed by processor(s) 81 to cause third-party system(s) 80 to perform operations. The operations can implement any one or multiple features described herein. The operations can implement example methods and techniques described herein. Example operations include the functionality described herein with respect to tools and other external resources called when training or performing inference with machine-learned model(s) 1, 4, 16, 20, 55, 65, etc. (e.g., third-party resource(s) 85).

Figure 12 illustrates one example arrangement of computing systems that can be used to implement the present disclosure. Other computing system configurations can be used as well. For example, in some implementations, one or both of computing system 50 or server computing system(s) 60 can implement all or a portion of the operations of model development platform system 70. For example, computing system 50 or server computing system(s) 60 can implement developer tool(s) 75 (or extensions thereof) to develop, update/train, or refine machine-learned models 1, 4, 16, 20, 55, 65, etc. using one or more techniques described herein with respect to model alignment toolkit 17. In this manner, for instance, computing system 50 or server computing system(s) 60 can develop, update/train, or refine machine-learned models based on local datasets (e.g., for model personalization/customization, as permitted by user data preference selections).

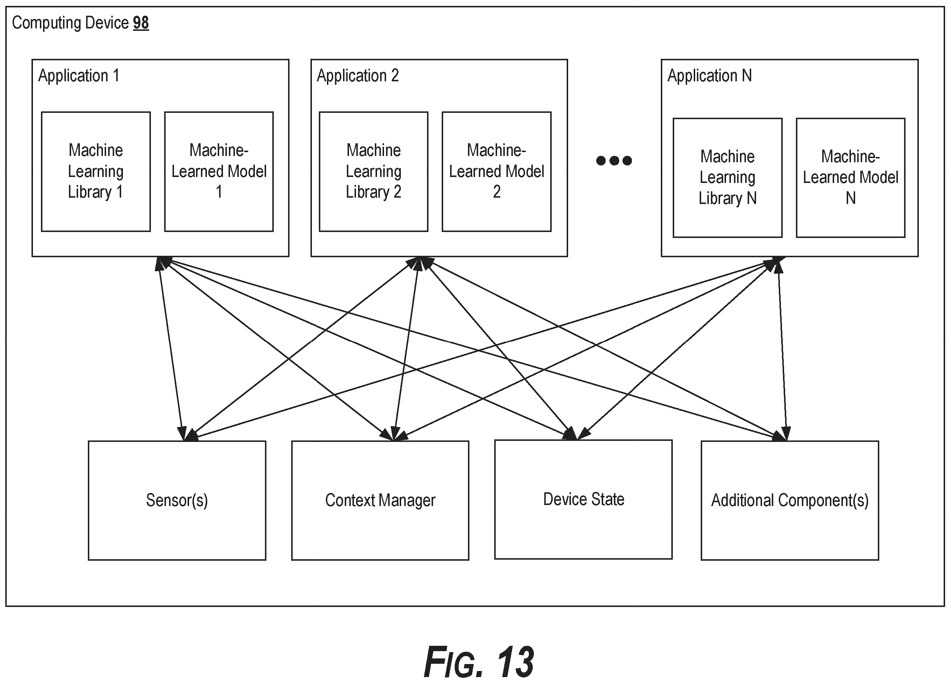

Figure 13 is a block diagram of an example computing device 98 that performs according to example embodiments of the present disclosure. Computing device 98 can be a user computing device or a server computing device (e.g., computing device 50, server computing system(s) 60, etc.). Computing device 98 can implement model host 31. For instance, computing device 98 can include a number of applications (e.g., applications 1 through N). Each application can contain its own machine learning library and machine-learned model(s). For example, each application can include a machine-learned model. Example applications include a text messaging application, an email application, a dictation application, a virtual keyboard application, a browser application, etc. As illustrated in Figure 13, each application can communicate with a number of other components of the computing device, such as, for example, one or more sensors, a context manager, a device state component, or additional components. In some implementations, each application can communicate with each device component using an API (e.g., a public API). In some implementations, the API used by each application is specific to that application.

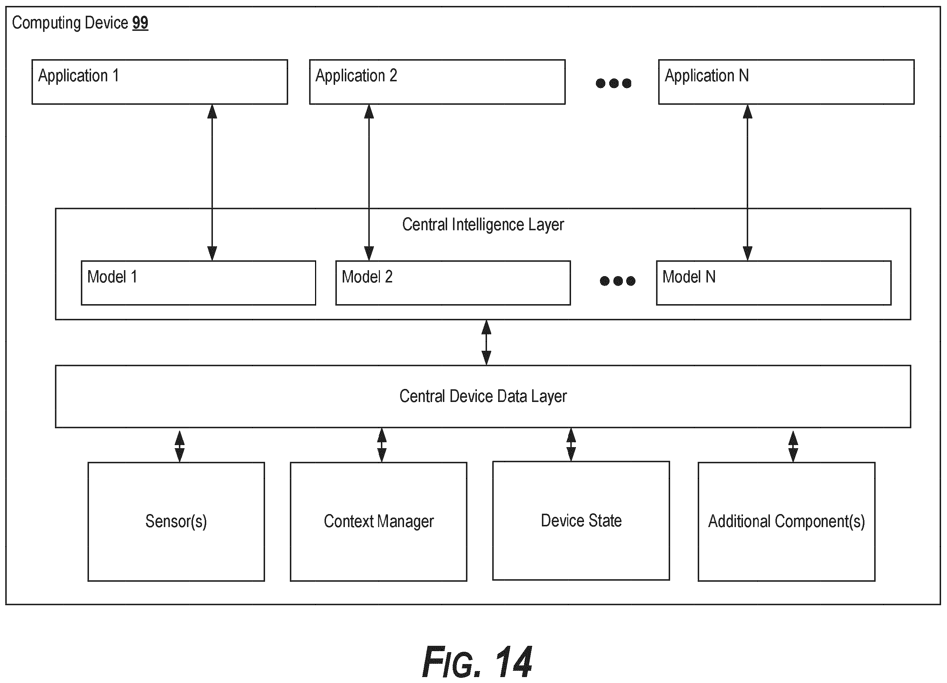

Figure 14 is a block diagram of an example computing device 99 that performs according to example embodiments of the present disclosure. Computing device 99 can be the same as or different from computing device 98. Computing device 99 can be a user computing device or a server computing device (e.g., computing device 50, server computing system(s) 60, etc.). Computing device 98 can implement model host 31. For instance, computing device 99 can include a number of applications (e.g., applications 1 through N). Each application can be in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer can include a number of machine-learned models. For example, as illustrated in Figure 14, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of computing device 99.

The central intelligence layer can communicate with a central device data layer. The central device data layer can be a centralized repository of data for computing device 99. As illustrated in Figure 14, the central device data layer can communicate with a number of other components of the computing device, such as, for example, one or more sensors, a context manager, a device state component, or additional components. In some implementations, the central device data layer can communicate with each device component using an API (e.g., a private API).

The technology discussed herein makes reference to servers, databases, software applications, and other computer-based systems, as well as actions taken and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations, variations, and equivalents.

Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and," "or," "but," etc. It should be understood that such conjunctions are provided for explanatory purposes only. Clauses and other sequences of items joined by a particular conjunction such as "or," for example, can refer to "and/or," "at least one of", "any combination of" example elements listed therein, etc. Terms such as "based on" should be understood as "based at least in part on."

The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

## Claims

1. A computing system for performing model decoding with reduced latency, the computing system comprising:
one or more processors; and
one or more non-transitory computer-readable media that collectively store:
a machine-learned sequence processing model comprising:
a plurality of drafting layers configured to process a current input to generate an intermediate representation;
an adapter layer configured to process the intermediate representation to generate a next drafted token; and
a plurality of verification layers configured to process the intermediate representation to generate a next verification token; and
computer-executable instructions for performing operations, the operations comprising:
for each of a plurality of decoding iterations:
processing the current input with the plurality of drafting layers of the sequence processing model to generate the intermediate representation for the decoding iteration;
processing the intermediate representation for the decoding iteration with the adapter layer to generate a next drafted token for the decoding iteration; and
adding the next drafted token to the current input for a subsequent decoding iteration; and
respectively processing the respective intermediate representation from each decoding iteration with the plurality of verification layers of the sequence processing model to generate a plurality of verification tokens for the plurality of decoding iterations.

2. The computing system of claim 1, wherein the operations further comprise comparing the drafted token for each decoding iteration with the verification token for such decoding iteration to identify any disagreements.

3. The computing system of claim 1 or claim 2, wherein the plurality of drafting layers comprises fewer layers than the plurality of verification layers.

4. The computing system of any of the preceding claims, wherein the machine-learned sequence processing model comprises a pre-trained model in which the plurality of drafting layers and the plurality of verification layers were jointly trained based on evaluating outputs of the verification layers with a loss function.

5. The computing system of any of the preceding claims, wherein the adapter layer comprises one or more linear projections.

6. The computing system of any of the preceding claims, wherein the adapter layer comprises one or more multi-layer perceptrons.

7. The computing system of any of the preceding claims, wherein the adapter layer was fine-tuned while holding the plurality of drafting layers frozen.

8. The computing system of any of the preceding claims, wherein the adapter layer has been trained using a loss function that comprises a knowledge distillation loss term, wherein the knowledge distillation loss term penalizes a difference between a student output of the adapter layer and a teacher output of the verification layers.

9. The computing system of any of the preceding claims, wherein the adapter layer has been trained using a loss function that comprises an embedding distillation loss term, wherein the embedding distillation loss term penalizes a difference between an embedding output of the adapter layer and an embedding output of the verification layers.

10. The computing system of any of the preceding claims, wherein said respectively processing the respective intermediate representation from each decoding iteration with the plurality of verification layers is performed subsequent to a final decoding iteration of the plurality of decoding iterations.

11. The computing system of any of the preceding claims, wherein said respectively processing the respective intermediate representation from each decoding iteration with the plurality of verification layers is performed at least partially in parallel with one or more of the decoding iterations; and/or
wherein, for each of the plurality of decoding iterations, the operations further comprise storing the intermediate representation; and/or
wherein the drafted tokens and the verification tokens correspond to text content, image content, or audio content.

12. A computer-implemented method for performing model decoding with reduced latency, the method comprising:
for each of a plurality of decoding iterations:
processing a current input with a plurality of drafting layers of a sequence processing model to generate an intermediate representation for the decoding iteration;
processing the intermediate representation for the decoding iteration with an adapter layer to generate a next drafted token for the decoding iteration; and
adding the next drafted token to the current input for a subsequent decoding iteration; and
respectively processing the respective intermediate representation from each decoding iteration with a plurality of verification layers of the sequence processing model to generate a plurality of verification tokens for the plurality of decoding iterations.

13. The method of claim 12, further comprising comparing the drafted token for each decoding iteration with the verification token for such decoding iteration to identify any disagreements; and/or
wherein the plurality of drafting layers comprises fewer layers than the plurality of verification layers; and/or
wherein the machine-learned sequence processing model comprises a pre-trained model in which the plurality of drafting layers and the plurality of verification layers were jointly trained based on evaluation of outputs of the verification layers.

14. One or more non-transitory computer-readable media that collectively store computer-executable instructions for performing operations, the operations comprising:
obtaining a pre-trained sequence processing model comprising a plurality of layers;
modifying the sequence processing model to contain an adapter layer that is configured to receive and process an intermediate representation generated by a selected intermediate layer of the plurality of layers to predict an output token;
training the adapter layer while holding the plurality of layers of the sequence processing model frozen; and
deploying the sequence processing model for speculative decoding in which the adapter layer, the particular intermediate layer, and the plurality of layers that precede the particular intermediate layer perform speculative token decoding and the plurality of layers that are subsequent to the particular intermediate layer perform token verification.

15. The one or more non-transitory computer-readable media of claim 14, wherein training the adapter layer comprises optimizing a loss function that comprises a knowledge distillation loss term, wherein the knowledge distillation loss term penalizes a difference between a student output of the adapter layer and a teacher output of the plurality of layers that are subsequent to the particular intermediate layer; and/or
wherein training the adapter layer optimizing a loss function that comprises an embedding distillation loss term, wherein the embedding distillation loss term penalizes a difference between an embedding output of the adapter layer and an embedding output of the plurality of layers that are subsequent to the particular intermediate layer.
